# EUROPEAN PATENT SPECIFICATION

(11) **EP 1 352 570 B1**
(45) Date of publication and mention of the grant of the patent: **20.02.2008**
(21) Application number: 01271154.5
(22) Date of filing: 17.12.2001
(51) Int. Cl.: A23L 1/308, A23L 1/30, A23L 1/03, A23L 3/3472, C08B 37/00, A23L 1/053

(54) **CACAO-ORIGIN WATER SOLUBLE DIETARY FIBER, PROCESS FOR PRODUCING THE SAME, FOODS AND DRINKS WITH THE USE THEREOF AND PROCESS FOR PRODUCING THE SAME**
WASSERLÖSLICHER BALLASTSTOFF AUS KAKAO, VERFAHREN ZU SEINER HERSTELLUNG, DAMIT HERGESTELLTE NAHRUNGSMITTEL UND GETRÄNKE SOWIE VERFAHREN ZU DEREN HERSTELLUNG
FIBRE ALIMENTAIRE SOLUBLE DANS L'EAU PROVENANT DE CACAO, SON PROCEDE DE PRODUCTION, ALIMENTS ET BOISSONS CORRESPONDANTS ET LEUR PROCEDE DE FABRICATION

(30) Priority: 20.12.2000 JP 2000386247; 25.12.2000 JP 2000392056; 28.12.2000 JP 2000400410; 23.01.2001 JP 2001014080; 08.02.2001 JP 2001031664
(43) Date of publication of application: 15.10.2003
(73) Proprietor: Fuji Oil Co., Ltd, Osaka 542-0086 (JP)
(72) Inventor: NAKAMURA, Akihiro c/o Fuji Oil Company, Limited, Tsukuba-gun, Ibaraki 300-2436 (JP); YOSHIDA, Ryuji c/o Fuji Oil Company, Limited, Tsukuba-gun, Ibaraki 300-2436 (JP); MAEDA, Hirokazu c/o Fuji Oil Company, Limited, Tsukuba-gun, Ibaraki 300-2436 (JP); NAGAOKA, Shushi c/o Fuji Oil Company, Limited, Izumisano-shi, Osaka 598-8540 (JP)
(74) Representative: Manaton, Ross Timothy
(86) International application number: PCT/JP2001/011053
(87) International publication number: WO 2002/049456

(56) References cited:
- EP-A- 0 344 728
- EP-A- 0 562 171
- JP-A- 2 167 036
- JP-A- 8 298 959
- JP-A- 11 042 057
- WHISTLER R L ET AL: "Cacao Polysaccharides" JOURNAL OF THE AMERICAN CHEMICAL SOCIETY, AMERICAN CHEMICAL SOCIETY, WASHINGTON, DC, US, vol. 78, 1956, pages 2851-2853, XP002219088 ISSN: 0002-7863
- ARRIGONI E., CAPREZ A., AMADO R., NEUKOM H.: "Gravimetric method for the determination of insoluble and soluble dietary fibres" ZEITSCHRIFT FÜR LEBENSMITTEL-UNTERSUCHUNG UND -FORSCHUNG, vol. 178, no. 3, 1984, pages 195-198, XP009043645 ISSN: 1431-4630
- BLAKEMORE W R ET AL: "Polysaccharides of the Cocoa Pod Husk" JOURNAL OF THE SCIENCE OF FOOD AND AGRICULTURE, ELSEVIER APPLIED SCIENCE PUBLISHERS. BARKING, GB, vol. 17, December 1966 (1966-12), pages 558-560, XP002219090 ISSN: 0022-5142
- ADOMAKO D.: "Cocoa pod husk pectin" PHYTOCHEMISTRY, vol. 11, 1972, pages 1145-1148, XP001205199
- KAMIKAWI T., SUGITA D., ITO M., SHIMURA S., MITZTANI T.: "Effects of extract and fiber derived from cacao bean's husk on human intestinal microflora" JOURNAL OF THE JAPANESE SOCIETY FOR FOOD SCIENCE AND TECHNOLOGY - NIPPON SHOKUHIN KAGAKU KOGAKU KAISHI, vol. 46, no. 12, 1999, pages 771-778, XP009043647 ISSN: 1341-027X
- PATENT ABSTRACTS OF JAPAN vol. 014, no. 431 (C-0759), 17 September 1990 (1990-09-17) & JP 02 167036 A (MORINAGA & CO LTD), 27 June 1990 (1990-06-27)
- ANDON S A: "APPLICATIONS OF SOLUBLE DIETARY FIBER" FOOD TECHNOLOGY, INSTITUTE OF FOOD TECHNOLOGISTS. CHICAGO, US, vol. 41, no. 1, January 1987 (1987-01), pages 74-75, XP009001382 ISSN: 0015-6639
- PATENT ABSTRACTS OF JAPAN vol. 1996, no. 12, 26 December 1996 (1996-12-26) & JP 08 196268 A (LOTTE CO LTD), 6 August 1996 (1996-08-06)
- SERRA BONHEVI J., ARAGAY BENERIA M.: "Composition of dietary fibre in cocoa husk" ZEITSCHRIFT FÜR LEBENSMITTEL-UNTERSUCHUNG UND -FORSCHUNG, vol. 207, no. 2, 1998, pages 105-109, XP009043646 ISSN: 1431-4630
- PATENT ABSTRACTS OF JAPAN vol. 2000, no. 06, 22 September 2000 (2000-09-22) & JP 2000 086526 A (LOTTE CO LTD), 28 March 2000 (2000-03-28)

## Description

### Technical Field

The present invention relates to cacao-derived water-soluble dietary fiber, to a process for its production, to foods and beverages containing it and to methods for their preparation.

### Background Art

The cacao bean has long been in common use as a raw material for chocolate, but the outer covering of the cacao bean (the cacao husk), while sometimes utilized as a livestock feed, is for the most part discarded in modern production. Utilization of cacao husks has been investigated in recent years, as evidenced by patent publications relating to, for example, an oral composition (Japanese Unexamined Patent Publication No. 1-130164), an antiviral agent for AIDS (Japanese Unexamined Patent Publication No. 3-197432), a material with activity which suppresses cholesterol level rise and HDL-cholesterol level fall, health foods and beverages containing them (Japanese Unexamined Patent Publication No. 6-98718), and substances with physiological activity such as lactic acid bacteria growth accelerating substances (Japanese Unexamined Patent Publication No. 8-196268).

All of the aforementioned substances are dietary fiber substances, flavonoid compounds or alkali-soluble dietary fiber substances which are obtained by either slow extraction from cacao husks at low temperatures of from room temperature to below 100°C under neutral or alkaline conditions using water or an organic solvent, or by short-term treatment for 10-20 minutes at up to 120°C, in order to prevent loss of their physiological activity, and at the current time it is not yet possible to obtain water-soluble dietary fiber with a high yield.

Whistler R.L. et al, "Cacao Polysaccharides", Journal of the American Chemical Society, vol.78, 1956, pg 2851-2853, discloses polysaccharides extracted from cacao fruit husk (the husk of the whole cacao fruit) and cacao seeds (the whole seeds) but it does not mention the extraction of polysaccharides from the outer covering of cacao seeds as is claimed in the present invention.

Arrigoni E. et al, "Gravimetric method for the determination of insoluble and soluble dietary fibres", Zeitschrift für lebensmitteluntersuchung und-forschung, vol.178, pg 195-198, discloses a method for extracting a soluble dietary fibre by heating cacao husks at pH 6 and 100 °C for 15 minutes followed by enzyme treatment, whereas the present invention specifies that hot water extraction is to be carried out at a temperature above 100 °C and no higher than 130 °C.

Blakemore W.R. et al, "Polysaccharides of the cocoa pod husk", Journal of the Science of Food and Agriculture, vol.17, pg558-560, discloses polysaccharides extracted from cacao pod husk (the husk of the whole fruit) but it does not mention the extraction of polysaccharides from the outer covering of cacao seeds as is claimed in the present invention.

Adomako D., "Cocoa pod husk pectin", Phytochemistry, vol 11, pg 1145-1148, discloses the extraction of pectin (polysaccharides) from cacao pod husk (the husk of the whole fruit) with a weak acid but it does not mention the extraction of polysaccharides from the outer covering of cacao seeds as is claimed in the present invention.

Kamikawi T. et al., "Effects of extract and fiber derived from cacao bean's husk on human intestinal microflora", Journal of the Japanese Society for Food Science and Technology, vol. 46, pg 771-778, discloses the extraction of soluble fibre from cacao seed husks with 95 % ethanol at 55 °C and water at 40 °C. The present invention differs from this disclosure in that it specifies that hot water extraction is to be carried out at a temperature above 100 °C and no higher than 130 °C.

Patent Abstracts of Japan, vol 014, no. 431, 17th September 1990 and JP 02 167036 A (Morinaga & Co. Ltd) 27^{th} June 1990, disclose the extraction of polysaccharides from cacao outer pod husks but do not mention the extraction of polysaccharides from the outer covering of cacao seeds as is claimed in the present invention.

Incidentally, production of acidic protein foods has conventionally incorporated the use of apple- or citrus-derived pectins, soybean hemicellulose, carboxymethylcellulose sodium, alginic acid propylene glycol ester and the like to prevent aggregation and precipitation of the protein particles. However, most stabilizers are only able to satisfactorily stabilize a dispersion of proteins in a pH range below the isoelectric point of the proteins, while few stabilizers are able to sufficiently stabilize acidic protein foods in the acidic pH range above the isoelectric point.

On the other hand, it has been reported that stabilization of a protein component is possible by addition of an organic acid salt in the slightly acidic range from neutral to pH 5.2 (Japanese Examined Patent Publication No. 5-52170), but this proposal also entails problems, such as loss of lyophilicity of the stabilized protein solution, or inability to obtain a satisfactory acidic flavor due to the effect of the added organic acid salt.

It has also been reported that protein components can be stabilized by certain pectins obtained from root vegetables, and particularly tubers, in the weakly acidic pH range (Japanese Unexamined Patent Publication No. 2000-273101), but although the pectins exhibit satisfactory stability in a pH range above the isoelectric points of proteins, the prepared drinks have very low viscosity and exhibit poor body.

In addition, milk proteins in acidic dairy beverages such as yogurt drinks, lactic acid beverages, fruit milk and the like are highly unstable and tend to aggregate and, after a long period, the milk protein precipitates resulting in separation of the whey. Such aggregation is particularly notable during sterilization heating, and may result in a total loss of product quality.

Chocolate drinks and cocoa drinks are commonly known types of chocolate beverages containing cacao components. They are generally prepared by mixing cocoa powder and/or cacao mass with saccharides such as sucrose, glucose, fructose, isomerized sugar or the like, dairy products such as milk, powdered milk, cream or butter, and water, and then adding emulsifiers such as sucrose fatty acid esters to emulsify the oily portion or disperse the cocoa powder, cacao mass and dairy products. The components are homogenized with a homogenizer and then packed into a can or other container and subjected to sterilization.

However, the results are often unsatisfactory after heat treatment even when such additives are used, or addition of an amount sufficient to exhibit the effect may result in a reduced flavor or a lumpiness due to increased viscosity, thereby notably impairing the product value.

In some cases, the raw material is mixed as a powder, or a slurry mixture of a solid raw material and liquid raw material is dried, to prepare a chocolate beverage powder which is later dispersed and dissolved in water or milk for consumption.

Because of precipitation of solids consisting mainly of fiber in the cocoa powder or cacao mass and the instability of the state of dispersion of the fat and milk components in such chocolate beverages, it is common to use additives, for example, emulsifiers such as polyglycerin fatty acid esters, or polysaccharide thickeners such as soybean hemicellulose, carrageenan, xanthan gum and the like, and sometimes crystalline cellulose, in order to prevent precipitation and/or improve the dispersion stability.

Moreover, food products, such as widely consumed health foods and functional foods, have in recent years been prepared in the form of tablets, granules, capsules and the like. Such types of foods contain useful components in a concentrated form, and the useful components must therefore often be coated in order to prevent heating and drying to maintain their stable state or to facilitate their handling for consumption.

While sweet sake or saccharides have traditionally been added to ordinary processed marine products, confectioneries and other food products for gloss, these substances are merely glossy and exhibit poor gas barrier properties. Pullulan is known as a coating agent with satisfactory gas barrier properties, but because of its complex production steps and very high cost, it is not commonly employed.

Frozen fish are subjected to glaze treatment to prevent freezer burn, and additives such as carboxymethyl cellulose, gelatin and gum Arabic are used for the purpose of delaying evaporation of the glaze coating. However, such substances are not widely used because they are synthetic or highly expensive products, and their cohesiveness tends to result in adhesion of the coated substances together and formation of lumps.

Various polysaccharides such as guar gum, tragacanth gum, xanthan gum, carrageenan, tamarind gum, locust bean gum and agar can be used as coating agents, but their high viscosity complicates preparation of high-concentration solutions, making it difficult to use coating solutions only in the amounts needed to obtain the desired effects. Even when preparing a coating solution to a sprayable concentration, because of the low concentration, such a long time is required for coating to the desired coating thickness that this has not been practical.

Non-water-soluble coating agents such as shellac, zein and chitosan are also known and utilized as coating agents for food products. Shellac and zein require the use of an alcohol or hydrous alcohol during coating, and sometimes inadequately dissolve in the stomach or intestines. Chitosan is soluble in acidic environments and is used as a coating agent under acidic conditions, but this is not practical because when an acid is used in a coating agent the acid residue remains in the coated film and often affects the properties of the coated substance.

Sucrose sugar coatings are also commonly used as coating agents for medicines and foods. They have disadvantages, however, in that their strength is insufficient unless the coating layer is thick, and consequently a large amount of such coatings are ingested in the case of foods which are usually ingested in greater amounts than medicines, for example, while a long time is required for their coating.

Gum arabic, which has excellent coat-forming properties, is used as a coating agent for forming sugar coatings, but it is not only costly but also fluctuates in-price depending on the producing country, and therefore its supply is unstable. This has recently increased the importance of starch-based substitutes comprising processed starch or dextrin.

However, such starch-based substitutes have the drawback of weak coating strength and adhesion. Specifically, sugar coating treatment cannot be easily accomplished using starch-based substitutes, because cracks tend to occur in the sugar coating surface during the process, resulting in flaking of the sugar coating and thus reduced productivity and product value. Gum Arabic is often included as a strategy to prevent this, but the cost is increased as a result. A coating agent with high coated film strength, stable supply provision and low cost has therefore been desired.

Starch-containing foods such as cookies, sponge cakes, bread, rice cakes, steamed rolls, Chinese buns and the like have tended to undergo texture alteration as the starch components age (harden), and therefore fats and oils, margarine or emulsifiers have been commonly added in large amounts to the raw materials to maintain or improve the texture. However, modern consumers increasingly desire foods with lower fat and oil contents, for the purpose of reducing calorie intake. Excessive use of emulsifiers can, as a drawback, impair the flavor of the resulting products. Various types of gum substances are therefore added in place of fats, oils or emulsifiers during the production of starch-containing foods; however, gum substances are not only expensive but also produce a more sticky food texture, and as a result it is often impossible to achieve the desired texture, and deterioration in quality cannot be adequately prevented.

There also exists today a tendency to prefer softer foods, which also applies to starch-containing foods whose main raw materials consist of starch, such as cookies, sponge cakes, bread, rice cakes, steamed rolls, Chinese buns and the like, and it has been a goal to achieve a feel immediately after preparation which is softer than that of conventional products. On the other hand, with the trend toward improving and extending the shelf-life of food products through preserving technology, food products have been required to retain their satisfactory texture for even longer periods. Yet, it has been difficult to maintain acceptable texture for prolonged periods using the fats and oils or gum substances mentioned above.

In recent years, refrigeration and freezing have been adopted as methods of storing starch-containing foods prepared by cooking, steaming or boiling while maintaining satisfactory texture. Such starch-containing foods such as bread, steamed rolls, Chinese buns and the like are sometimes heated in microwave ovens before consumption, and heating in a microwave oven can result in a poor biting texture, while shrinkage also occurs as the product ages (hardens) rapidly upon cooling, producing wrinkles on the surface and causing it to lose most of its product value.

In order to overcome this drawback, there have been proposed microwave oven heatable Chinese buns containing agar jelly in the meat filling of the buns (Japanese Unexamined Patent Publication No. 4-287669). Frozen Chinese buns suitable for microwave heating, characterized by containing plant fiber powder, have also been proposed (Japanese Unexamined Patent Publication No. 3-22941).

However, because these methods involve changing the composition of the buns or addition of jelly or the like, the original taste and texture still change even though the problem of degeneration of Chinese buns by microwave heating is avoided to some degree. Moreover, in addition to the complexity of the procedure, the advantage of a relatively satisfactory condition immediately after microwave oven heating is lessened by the fact that currently no consideration is given to the impaired texture or outer appearance with time as the product cools and hardens.

Organic acids, inorganic acids, ethanol and glycine have also been used to prevent degeneration of foods and beverages with time and improve their shelf-life (Japanese Unexamined Patent Publication No. 56-109580, Japanese Unexamined Patent Publication No. 57-43668, Japanese Unexamined Patent Publication No. 58-138367).

In recent years, pectin digested products, polylysine, protamine and lysozyme have been discovered as semi-natural food preservatives and shelf-life extending agents, which are preferred over chemical synthetic products.

However, ethanol, organic acids, inorganic acids and the like commonly used to extend the shelf-life of various foods and beverages lose their effects upon evaporation, while they also exhibit characteristic flavors and odors, and therefore cannot be added to foods and beverages in sufficient amounts to obtain satisfactory preserving effects. In addition, the natural substances glycine, polylysine, protamine and lysozyme have very narrow microbiostatic spectra, that is, they may exhibit powerful microbiostatic action against particular strains but are ineffective against most strains that cause browning or deterioration of food products, and for this reason their preserving effects have been less than satisfying. Because they must therefore be added in large amounts to food products in order to achieve adequate keeping quality, and thereby affect the flavor and increase the cost of the food products, these substances are undesirable for ordinary use.

In addition to the substances mentioned above, it has been reported that certain substances exhibiting antimicrobial or microbiostatic properties are contained in spices traditionally used in food products, but they are not suitable for regular use from a flavor standpoint and hence fail to satisfy the conditions for shelf-life extenders for food products.

On the other hand, cacao beans, the raw material for chocolate-containing food products, have a wide variety of properties. For example, the ordinary pressure fraction extracted from cacao beans and husks at 100°C or below with water or an aqueous phase-soluble organic solvent is used as an immunoactivator (Japanese Unexamined Patent Publication No. 2000-86562), the use of similarly extracted polyphenols for their antibacterial activity has been proposed (Japanese Unexamined Patent Publication No. 2000-128801), and the use of components solvent-extracted from cacao husks as concentration enhancers has been proposed (Japanese Unexamined Patent Publication No. 6-125710).

In addition, pressure extract from cacao mass has been reported to exhibit antibacterial activity against pathogenic *E. coli* 0-157 (Infect. Dis. J., Vol. 73, No.7, 694, 1999).

However, such extraction from whole cacao beans results in discarding of the expensive cacao beans, whereas extraction from discarded husks gives a low yield and has therefore not been practical.

It is an object of one aspect of the invention to provide water-soluble dietary fiber derived from cacao husks and an efficient production process therefor, as well as acidic protein foods containing it and preparation methods therefor, and also to provide heat-sterilized milk component-containing beverages whose milk components are stable for prolonged periods and which can be transported at ordinary temperature. The term "cacao husks" according to the present invention refers to the outer covering of cacao seeds, and the term "acidity" is used to mean the pH range from pH 7.0 and below.

It is an object of another aspect of the invention to provide chocolate beverages with low solid precipitation and a satisfactory state of dispersion of the fat and milk components.

It is an object of yet another aspect of the invention to provide a coating agent which exhibits effects of glazing, protection from oxidation, shelf-life extension, improved handleability, better coating properties and stronger sugar coating for food products, and which can be produced easily and inexpensively.

It is an object of yet another aspect of the invention to prevent gradual texture alteration (aging) occurring in starch-containing foods whose main raw material is starch, such as cookies, sponge cakes, bread, rice cakes, steamed rolls, Chinese buns and the like, to improve their shelf-life, and to minimize gradual texture alteration (aging) which occurs after microwave oven heating.

It is a preferred aspect of the invention that shelf-life extenders used in foods and beverages continue to maintain their microbiostatic properties even when added in small amounts and stored for long periods, while it is essential that texture is not impaired when they are used in food products.

### Disclosure of Invention

As a result of much diligent research directed toward solving the numerous problems referred to above, the present inventors have discovered characteristic functions in water-soluble dietary fiber obtained by hot water extraction from cacao husks under conditions of pH 6.5 and below. Specifically, it was found that the fiber can satisfactorily stabilize acidic protein foods at lower viscosity than with fruit-derived pectins and at higher viscosity than with potato-derived pectins, in a pH range above the isoelectric point of the proteins.

Furthermore, it was found that by using water-soluble dietary fiber obtained by hot water extraction from cacao husks, which exhibits both the function of an emulsifier and the function of a dispersion stabilizer for chocolate beverages, it is possible to prepare chocolate beverages which are resistant to precipitation of solids even after heat sterilization and prolonged storage and which have excellent dispersion stability of their fatty acid components and milk components without reduced flavor or increased viscosity.

It was further discovered that water-soluble dietary fiber obtained by hot water extraction from cacao husks is superior to conventional coating agents in terms of its stability, biodegradability, coatability, gas barrier properties and suitable aqueous solution viscosity as a coating agent, and that it imparts strength to sugar coatings when combined therewith and allows preparation to be carried out in a relatively inexpensive manner.

It was even further discovered that adding water-soluble dietary fiber obtained by hot water extraction from cacao husks to starch-containing food products inhibits alteration in the texture of the food products with time, thereby improving the shelf-life and preventing alteration in texture after microwave oven heating.

It was also found that hot water extraction from discarded cacao husks, and especially pressure extraction under acidic conditions, can very efficiently give a fraction with high antimicrobial (or microbiostatic) activity, which can serve as a practical shelf-life extender for foods and beverages.

Consequently, the first aspect of the invention is a process for production of water-soluble dietary fiber comprising hot water extraction from the outer covering of cacao seeds, as well as water-soluble dietary fiber derived from the outer covering of cacao seeds, a dispersion stabilizer comprising the water-soluble dietary fiber and methods for preparation of acidic protein foods characterized by using the dispersion stabilizer, and acidic protein foods prepared by the process.

The second aspect of the invention is a method for preparation of chocolate beverages comprising using the aforementioned dispersion stabilizer, as well as chocolate beverages prepared by the process.

The third aspect of the invention is a coating agent comprising the aforementioned water-soluble dietary fiber, as well as a coating method using the coating agent.

The fourth aspect of the invention is an age resistor for starch-containing food products which comprises the aforementioned water-soluble dietary fiber, as well as an age preventing method for starch-containing food products comprising adding the water-soluble dietary fiber to the age resistor in a proportion of 0.1-15 parts by weight per 100 parts by weight of the starch, and starch-containing food products prepared by the age preventing method.

The fifth aspect of the invention is a shelf-life extender for foods and beverages comprising the aforementioned water-soluble dietary fiber, as well as a method for preserving foods and beverages comprising adding the water-soluble dietary fiber contained in the shelf-life extender in an amount of 0.01-50 wt% with respect to the foods and beverages.

The cacao beans used as the raw material for hot water extraction according to the invention are usually subjected to roasting treatment, and the husks of the raw material may be removed either before or after the roasting. The cacao husks may be used without crushing for extraction, but crushed husks are preferred. Sufficient microbiostatic properties are not exhibited by the extract obtained from whole cacao beans or cacao mass.

As the conditions for hot water extraction from the cacao husk raw material, the pH of the extract may be from pH 2.0 to pH 6.5, and preferably from pH 2.5 to pH 6.5. Hot water extracts obtained outside of this pH range do not adequately exhibit the function expected as the object of the present invention.

Since dietary fiber extracted in the alkaline range of pH 7.0 and above has a high hemicellulose content and a low content of pectinic polysaccharides containing galacturonic acid, it cannot provide adequate dispersion stability of proteins in the weak acidic pH range above the isoelectric point. In addition, galacturonic acid methyl ester is partially decomposed while the polysaccharides themselves are decomposed by elimination, such that an adequate function is not exhibited. The flavor is also impaired due to reaction of sugars with the protein.

When extraction is performed in the strongly acidic pH range of lower than pH 2.0, the dietary fiber decomposes to a lower molecular weight, and no function is exhibited.

The extraction temperature for the water-soluble dietary fiber in the aforementioned pH range is preferably higher than 100°C under pressure. When the extraction is performed at a temperature of 100°C below, time is required for elution of the water-soluble dietary fiber, thus creating an economical disadvantage. On the other hand, while the extraction is complete in a shorter time with higher temperature, an excessively high temperature will adversely affect the flavor and color while also resulting in reduced function due to the lower molecular weight of the water-soluble dietary fiber; the temperature is therefore preferably no higher than 150°C and more preferably no higher than 130°C.

Although the pH may be adjusted during the extraction, the extraction can be facilitated by treatment with enzymes such as proteases, cellulases, hemicellulases, pectinases, amylases and the like. Also, while the fractionated water-soluble fraction after extraction can be dried for direct use, it is preferable to remove (desalt) the mineral components by electrodialysis, ion-exchange resin treatment, or the like, and a water-soluble dietary fiber of more a satisfactory quality can be obtained by carrying out active carbon treatment or resin treatment, or precipitation treatment with a solvent such as ethanol or isopropanol, to remove the hydrophobic substances or low molecular substances (for purification), after which it may be dried. Water-soluble dietary fiber of a more satisfactory quality can also be obtained by removal of the low molecular color components or foul-tasting components (purification) by UF membrane or ceramic filter separation.

A water-soluble fraction of satisfactory quality can also be extracted by using, during the extraction, various minerals, organic acids such as citric acid or lactic acid, inorganic acids such as phosphoric acid, polyphosphoric acid and hexametaphosphoric acid, or their salts, or emulsifiers such as sucrose fatty acid esters, monoglycerin fatty acid esters or polyglycerin fatty acid esters. In such cases, the desalting treatment or purification treatment described above is preferably carried out after separation of the water-soluble fraction.

The cacao husk-derived water-soluble dietary fiber used according to the invention may have any value for its molecular weight, but it preferably has an average molecular weight of from a few tens of thousands to a few million, more preferably from a few tens of thousands to a few hundred thousand, and specifically from 20,000 to 300,000. The average molecular weight referred to throughout the present specification is the value measured by gel filtration HPLC using a TSK-GEL G-5000PWXL, with standard pullulan (Showa Denko Co., Ltd.) as the standard substance.

The water-soluble dietary fiber includes galacturonic acid, galactose, rhamnose, arabinose, xylose, fucose, mannose and glucose. Uronic acid was measured according to the Blumenkrantz method, and neutral sugars were measured by GLC as alditol acetates.

There are no particular restrictions on the viscosity of the water-soluble dietary fiber, but it is preferably 10-500 cPs, more preferably 30-300 cPs and even more preferably 40-200 cPs at 20°C in an aqueous solution at 10% concentration.

### Best Mode for Carrying Out the Invention

### [First mode]

According to a first mode, water-soluble dietary fiber extracted from cacao husks has a characteristic function similar to that of pectins derived from root vegetables, and particularly potatoes, unlike traditional pectins derived from fruits such as apples or citrus fruits. That is, fruit-derived pectins are used as stabilizers for acidic dairy beverages, utilizing their function of stabilizing dispersion of proteins in the pH range below the isoelectric point, but the water-soluble dietary fiber of the invention has the function of stabilizing dispersion of proteins in a pH range above the isoelectric point, in a state of higher viscosity than possible with potato-derived pectins, thereby making it possible to prepare acidic protein food products that are stable in a pH range above the isoelectric point; this has not been possible in the prior art.

"Acidic protein food products" according to the invention are acidic food products containing animal or vegetable proteins, and they include a variety of acidic protein food products, for example, acidic protein beverages obtained by adding citrus fruit juices or other fruit juices, or organic acids such as citric acid or lactic acid or inorganic acids such as phosphoric acid, to beverages containing animal or vegetable proteins such as milk, soybean milk or the like, acidic dairy beverages obtained by acidifying dairy products, acidic frozen desserts such as acidic ice cream, frozen yogurt and the like obtained by adding fruit juice or the like to milk component-containing frozen desserts such as ice cream, acidic desserts obtained by adding fruit juices or the like to gelled foods such as puddings or bavarois, as well as coffee beverages, lactic acid bacteria beverages (containing live bacteria, or sterilized types), fermented milk (solid or liquid), and the like. Animal or vegetable proteins include cow milk, sheep milk, skim milk, soybean milk, whole milk powder forms of such milk, skim milk powder, soybean milk powder, sugar-added milk, milk concentrates, processed milk fortified with minerals such as calcium or vitamins, fermented milk, and proteins derived therefrom. Fermented milk is milk obtained by sterilizing the aforementioned animal or vegetable proteins and then adding a lactic acid bacteria starter for fermentation, and if desired, it may be powdered, sugar or the like may be added thereto, or it may be heat sterilized.

The water-soluble dietary fiber may be used in an amount of about 0.05-10 wt% and preferably 0.1-2 wt% with respect to the final protein food product, but these ranges are not limitative on the scope of the invention as they will vary depending on differences in protein concentration.

The acidic food protein products may also be prepared together with conventional stabilizers, for example, polysaccharides such as pectins, water-soluble soybean polysaccharides, carboxymethylcellulose sodium, alginic acid propylene glycol ester, carrageenan, furcellan, tamarind seed polysaccharides, tara gum, karaya gum, guar gum, locust bean gum, tragacanth gum, pullulan, gelan gum, native gelan gum, gum Arabic, dextrin, cyclodextrin, agar, microcrystalline cellulose, xanthan, processed starch and the like, or hydrolysates thereof, gelatin, organic acid salts, polymerization phosphoric acid salts, emulsifiers, heat-denatured proteins and the like, which can increase the stable pH range.

### Examples

Examples and comparative examples for the first mode of the invention will now be explained. Unless otherwise specified, the "parts" and "%" values throughout the examples are based on weight.

### Example 1

Cacao beans were whole bean roasted by an ordinary procedure, the beans were split to an appropriate size with a breaking roll and the split beans were separated by air classification to obtain the cacao husks, of which 500 g was dispersed in 4000 g of water, and then the dispersion was divided into 500 g portions, adjusted to pH 2.0, 3.0, 4.0, 5.0, 6.0, 7.0, 8.0 and 9.0, and heated at 110°C for 90 minutes for extraction of the water-soluble dietary fiber. After cooling, each extract was centrifuged (10,000 g x 30 min) to separate the water-soluble fraction and precipitating fraction. The separated precipitating portion was combined with an equivalent weight of water, the mixture was again centrifuged and the resulting supernatant liquid was mixed with the previous water-soluble fraction and lyophilized to obtain crude water-soluble dietary fiber. The recovered crude water-soluble dietary fiber was added to the composition shown in Table 1, and the dispersion stabilizing function on protein at pH 5.0 was evaluated.

**Table 1**

| | | |
|---|---|---|
| Water-soluble dietary fiber | (1% solution) | 20 parts |
| Sugar solution | (35% solution) | 10 parts |
| Milk | | 20 parts |
| Citric acid solution | 50% solution for adjustment to pH 5.0 | |

After mixing 20 parts of a 1% water-soluble dietary fiber solution, 10 parts of a 35% sugar solution and 20 parts of milk while cooling, a 50% citric acid solution was added dropwise to adjust the pH to 5.0, and the condition was observed. The evaluation results are shown in Table 2.

**Table 2**

| Adjusted pH before heat extraction | pH of extract after heating | Condition of acidic milk |
|---|---|---|
| pH 2.0 | pH 2.0 | slight aggregation |
| pH 2.5 | pH 2.5 | stable |
| pH 4.0 | pH 3.9 | stable |
| pH 5.0 | pH 4.9 | stable |
| pH 6.0 | pH 5.5 | stable |
| pH 7.0 | pH 5.8 | stable |
| pH 8.0 | pH 6.5 | stable |
| pH 9.0 | pH 7.2 | aggregation |

As shown in Table 2, the cacao husk-derived water-soluble dietary fiber was shown to exhibit a dispersion stabilizing function on protein at pH 5.0, when the pH of the extract was in the range of 2.0 to 6.5.

### Comparative Example 1

The protein dispersion stabilizing function at pH 5.0 was evaluated in the same manner as Example 1, except that the raw water-soluble dietary fiber extract was replaced with squeezed apple juice pulp (trade name: Apple Fiber, product of Nichiro Kogyo, 5% moisture content), and the results of the evaluation were as shown in Table 3 below.

**Table 3**

| Adjusted pH before heat extraction | pH of extract after heating | Condition of acidic milk |
|---|---|---|
| pH 2.0 | pH 2.0 | High aggregation |
| pH 3.0 | pH 2.9 | High aggregation |
| pH 4.0 | pH 3.7 | High aggregation |
| pH 5.0 | pH 4.3 | High aggregation |
| pH 6.0 | pH 4.7 | High aggregation |
| pH 7.0 | pH 5.3 | High aggregation |
| pH 8.0 | pH 6.2 | High aggregation |
| pH 9.0 | pH 7.0 | High aggregation |

As shown in Table 3, none of the fruit-derived water-soluble dietary fibers exhibited protein dispersion stabilization at pH 5.0, regardless of the extraction pH.

### Example 2

### Preparation of water-soluble dietary fiber (A)

Cacao beans were whole bean roasted by an ordinary procedure, the beans were split to an appropriate size with a breaking roll and the split beans were separated by air classification to obtain the cacao husks. Fifty parts of the obtained cacao husks was dispersed in 400 parts of water, and then the dispersion was adjusted to pH 5.0 and heated at 110°C for 90 minutes for extraction of the water-soluble dietary fiber. The pH was 4.9 upon completion of the extraction. After cooling, each extract was centrifuged (10,000 g x 30 min) to separate the water-soluble fraction and precipitating fraction. The separated precipitating portion was combined with an equivalent weight of water, the mixture was again centrifuged, the resulting supernatant liquid was mixed with the previous water-soluble fraction and the extract was directly lyophilized to obtain water-soluble dietary fiber (A).

### Preparation of water-soluble dietary fiber (B)

An extract obtained in the same manner as the water-soluble dietary fiber (A) was passed through an active carbon column for purification and then dried to obtain water-soluble dietary fiber (B).

### Preparation of water-soluble dietary fiber (C)

After adding 99% ethanol to an extract obtained in the same manner as the water-soluble dietary fiber (A) to a concentration of 50% to precipitate water-soluble dietary fiber, the precipitate was successively washed with 80%, 90% and 99% ethanol and air dried to obtain water-soluble dietary fiber (C).

### Preparation of water-soluble dietary fiber (D)

An extract obtained in the same manner as the water-soluble dietary fiber (A) was desalted to 2 mS/cm² with respect to the solid portion using an electrodialysis apparatus (Model CS-O, product of Asahi Glass Co., Ltd.) and then dried to obtain water-soluble dietary fiber (D).

The results of analysis of the water-soluble dietary fibers obtained in the manner described above are summarized in Table 4 below. The total sugar was measured by a phenol sulfate method, the uronic acid content was measured by the Blumenkrantz method, and the average molecular weight was measured by gel filtration HPLC using a TSK-GEL G-5000PWXL column, with standard pullulan (Showa Denko Co., Ltd.) as the standard substance.

**Table 4 Composition (%)**

| Component | (A) | (B) | (C) | (D) |
|---|---|---|---|---|
| Moisture | 4.1 | 5.3 | 5.5 | 5.0 |
| Crude protein | 8.9 | 6.8 | 7.1 | 5.9 |
| Crude ash | 16.5 | 12.7 | 9.5 | 7.0 |
| Total sugars | 53.6 | 65.6 | 64.2 | 68.3 |
| Uronic acid | 34.8 | 44.0 | 45.3 | 47.8 |
| Average molecular weight | 191,000 | 215,000 | 240,000 | 248,000 |

When the obtained water-soluble dietary fibers (A) to (D) were used to confirm protein dispersion stabilization at pH 5.0 in the same manner as Example 1, all exhibited satisfactory dispersion stabilization.

### Example 3

### Preparation of water-soluble dietary fiber (E)

Water-soluble dietary fiber (E) was obtained in the same manner as the water-soluble dietary fiber (A) of Example 2, except that the temperature for heat extraction was 80°C.

### Preparation of water-soluble dietary fiber (F)

Water-soluble dietary fiber (F) was obtained in the same manner as the water-soluble dietary fiber (A) of Example 2, except that the temperature for heat extraction under pressure was 100°C.

### Preparation of water-soluble dietary fiber (G)

Water-soluble dietary fiber (G) was obtained in the same manner as the water-soluble dietary fiber (A) of Example 2, except that the temperature for heat extraction under pressure was 105°C.

### Preparation of water-soluble dietary fiber (H)

Water-soluble dietary fiber (H) was obtained in the same manner as the water-soluble dietary fiber (A) of Example 2, except that the temperature for heat extraction under pressure was 120°C.

### Preparation of water-soluble dietary fiber (I)

Water-soluble dietary fiber (I) was obtained in the same manner as the water-soluble dietary fiber (A) of Example 2, except that the temperature for heat extraction under pressure was 130°C.

The obtained water-soluble dietary fibers (A) and (E) to (I) were used to confirm protein dispersion stabilization at pH 5.0 in the same manner as Example 1. The water-soluble dietary fibers (E) and (F) extracted at 80°C and 100°C had low yields of 11.8% and 25.9%, respectively, with respect to the raw material, and thus did not exhibit very satisfactory dispersion stability. In contrast, the yield of water-soluble dietary fiber (A) was 48.5%, the yield of water-soluble dietary fiber (G) was 42.5%, the yield of water-soluble dietary fiber (H) was 45.9% and the yield of water-soluble dietary fiber (I) was 51.2%, and thus satisfactory dispersion stability for proteins was exhibited.

### Example 4

After dispersing 1 kg of cacao husks in 8 kg of water, the pH was adjusted to 5.0, and the solution was heated at 110°C for 90 minutes under pressure for extraction of the water-soluble dietary fiber. After cooling, each extract was centrifuged (10,000 g x 30 min) to separate the water-soluble fraction and precipitating fraction. The separated precipitating portion was combined with an equivalent weight of water, the mixture was again centrifuged, the resulting supernatant liquid was mixed with the previous water-soluble fraction, and then the extract was directly spray dried to obtain crude water-soluble dietary fiber which was used as a stabilizer. The protein dispersion stabilizing function was evaluated at different pH values with the composition shown in Table 5 below.

### Comparative Example 2

The acidic milk beverage stability at different pH values was evaluated in the same manner as Example 4, except that the stabilizer was replaced with commercially available apple pectin (Classic AM201, trade name of Dainippon Pharmaceutical Co., Ltd.).

### Comparative Example 3

After suspending 500 g of dried purified potato starch pulp (POTEX, trade name of Lyckeby Starkelsen, 5% moisture content, 7% starch content (in solid portion)) in 9500 g of water and adjusting the pH to 4.5, the suspension was heated at 120°C for 30 minutes for extraction of the pectin. After cooling, the extract was centrifuged (10,000 g x 30 min) to separate the pectin extract and precipitating portion. The resulting supernatant liquid was directly spray dried to obtain the pectin. The acidic milk beverage stability at different pH values was evaluated in the same manner as Example 4, except that the stabilizer was replaced with this potato-derived pectin.

**Table 5**

| | | |
|---|---|---|
| Stabilizing solution | (1% solution) | 20 parts |
| Sugar solution | (35% solution) | 10 parts |
| Powdered skim milk solution | (8% solution) | 20 parts |
| Citric acid solution | 50% solution for adjustment to pH 4.0-6.4 | |

After mixing 20 parts of a 1% stabilizing solution, 10 parts of a 35% sugar solution and 20 parts of an 8% powdered skim milk solution while cooling, a 50% citric acid solution was added dropwise to adjust the pH to 4.0, 4.3, 4.5, 4.8, 5.0, 5.3, 5.5, 5.8, 6.0 or 6.4, a homogenizer was used for homogenization at 150 kgf/cm² to prepare an acidic milk beverage. The results of evaluation of the acidic milk beverage are shown in Table 6 below.

**Table 6**

| | Example 4 | | Comp. Ex. 2 | | Comp. Ex. 3 | |
|---|---|---|---|---|---|---|
| Acidic dairy beveage pH | Viscosity | Condition | Viscosity | Condition | Viscosity | Condition |
| pH 4.0 | 6.8 | high aggregation | 8.0 | stable | 6.0 | high aggregation |
| pH 4.3 | 5.7 | aggregation | 8.6 | stable | 5.4 | aggregation |
| pH 4.5 | 5.1 | stable | 9.4 | slight aggregation | 4.2 | stable |
| pH 4.8 | 5.0 | stable | 9.8 | aggregation | 3.1 | stable |
| pH 5.0 | 4.8 | stable | 10.5 | high aggregation | 2.7 | stable |
| pH 5.3 | 4.8 | stable | 9.8 | high aggregation | 2.5 | stable |
| pH 5.5 | 4.8 | stable | 9.5 | high aggregation | 2.9 | stable |
| pH 5.8 | 4.6 | stable | 9.4 | high aggregation | 2.5 | stable |
| pH 6.0 | 4.4 | stable | 9.8 | high aggregation | 2.4 | stable |
| pH 6.4 | 4.2 | stable | 9.2 | high aggregation | 2.5 | stable |

As shown in Table 6, the acidic milk beverages containing cacao husk-derived water-soluble dietary fiber as the stabilizer were confirmed to exhibit protein dispersion stabilization in the full acidic pH range above pH 4.5, which is the isoelectric point of milk protein. In addition, the viscosities of the acidic milk beverages were higher than those obtained using potato-derived pectin, and the beverages had a full body texture.

The acidic milk beverages containing apple-derived commercially available pectin as the stabilizer exhibited absolutely no protein dispersion stabilization in the acidic pH range above pH 4.5, which is the isoelectric point of milk protein. Even when the milk protein dispersion was stable at pH 4.5 and below, the viscosity was high and the texture was lumpy and gelatinous, differing substantially from the products prepared using the cacao husk-derived water-soluble dietary fiber of the invention.

### Preparation of milk coffee beverage (Example 5, Comparative Example 4)

### Example 5

After extraction of 500 g of medium roasted ground Colombian coffee beans with 5 liters of hot water, the extract was cooled to below 25°C to obtain 4.5 liters of coffee extract. A sugar mixture was then obtained by dissolving 700 g of granular sugar and 3 g of sucrose fatty acid ester in 1.3 liters of purified water. The coffee extract, the sugar mixture, a stabilizing solution comprising 3% water-soluble dietary fiber (A) and water were combined in the composition shown in Table 7 below and the entirety was adjusted to 1.8 liters, after which milk was slowly added to a total volume of 2 liters. After mixing the total amount, baking soda or L-ascorbic acid was used for adjustment to pH 7.0 (Example 5-1), 6.0 (Example 5-2) and 5.0 (Example 5-3), and the mixture was homogenized at 150 kg/cm² to prepare milk coffee beverages. The prepared milk coffee beverages were subjected to retort sterilization at 121°C for 30 minutes, and the milk protein dispersion stabilizing function of the water-soluble dietary fiber of the invention was evaluated based on heat stability.

### Comparative Example 4

Example 5 was repeated, but using purified water in place of the stabilizing solution comprising water-soluble dietary fiber (A).

**Table 7**

| | Example 5-1 | Example 5-2 | Example 5-3 | Comp.Ex.4 |
|---|---|---|---|---|
| Stabilizing solution | 400 parts | ← | ← | 0 |
| Coffee extract | 800 parts | ← | ← | ← |
| Sugar mixture | 400 parts | ← | ← | ← |
| Purified water | 200 parts | ← | ← | 600 parts |
| Milk | 200 parts | ← | ← | ← |
| Prepared pH | 7.0 | 6.0 | 5.0 | 6.0 |

Each of the prepared milk coffee beverages was heated to 95°C with a plate heater, filled into an empty can and sealed. The resulting canned milk coffee beverages were placed in a retort boiler for retort sterilization at 121°C for 30 minutes to obtain the milk coffee beverage products. Table 8 shows the results of evaluating the canned milk coffee beverages obtained in these examples and the comparative example. The row entitled "Evaluation after hot vendor storage" indicates the condition visually observed after storing the milk coffee beverages obtained in these examples and comparative example for 4 weeks in a 60°C constant temperature zone while stationary and then transferring the contents from the can to a beaker. The evaluation of "aggregation" in the columns entitled "Evaluation after retort sterilization" and "Evaluation after hot vendor storage" indicate that milk protein precipitation or fat separation was found. The acidity and flavor of the milk coffee beverages were also evaluated by an organoleptic evaluation. The organoleptic evaluation was conducted based on taste sampling by 15 panelists (male:female = 10:5, age 20:30:40 = 6:7:2) compared to the aroma and acidity of regular coffee, with +2 assigned for very excellent, 0 for ordinary and -2 for very poor, and the average values were recorded.

**Table 8**

| | Example 5-1 | Example 5-2 | Example 5-3 | Comp. Ex.4 |
|---|---|---|---|---|
| Evaluation after retort sterilization | | | | |
| pH | 6.5 | 5.6 | 5.2 | 5.5 |
| Stability organoleptic evaluation (aroma, acidity) | stable slightly weak flavor | stable satisfactory | stable satisfactory | aggregation undesirable flavor |
| Organoleptic evaluation (score) | 0.6 | 2.0 | 1.8 | - |
| Evaluation after hot vendor storage Stability | stable | stable | stable | - |

As shown in Table 8, when the water-soluble dietary fiber of the invention was used, aggregated separation of milk protein was absent in a wide pH range even after retort sterilization at 121°C for 30 minutes, thus confirming an excellent effect for heat stability. On the other hand, the product without addition (Comparative Example 4) exhibited separation and precipitation of the milk components after retort sterilization, thus notably impairing the product value.

### [Second mode]

Preparation of chocolate beverages according to a second mode of the invention may be accomplished by any ordinary preparation method, using chocolate components, sweeteners and milk components as raw materials, in addition to using water-soluble dietary fiber as a dispersion stabilizer.

The chocolate components used may be any one or more selected from among cocoa powder, cacao mass, cocoa butter and cocoa butter substitute.

Any publicly known sweetener may be used, for example, any one or more selected from among sugars such as sucrose, glucose, fructose, isomerized sugar, rice jelly, trehalose, maltitol or sorbitol, or other sweeteners such as aspartame, stevia, glycyrrhizin, thaumatin or the like.

The dairy products used may be any ordinary products, and as specific examples there may be mentioned milk, whole powdered milk, powdered skim milk, cream, butter, whole condensed milk, condensed skim milk, processed milk powder and the like.

The amount of the water-soluble dietary fiber added to a chocolate beverage is preferably 0.05-20.0 wt%, more preferably 0.1-10.0 wt% and most preferably 0.2-3.0 wt% with respect to the total beverage. The effect may be inadequate if the amount is too small, while the influence on the viscosity of the beverage increases if the amount is too large. The pH of the chocolate beverage is preferably from pH 5.0-9.0, more preferably pH 5.5-8.0 and even more preferably pH 6.0-7.5.

According to the invention, other emulsifiers and dispersion stabilizers may be used in the aforementioned chocolate beverages, regardless of whether they are in liquid form or in a powdered or paste form. Any publicly known emulsifiers or dispersion stabilizers may be used, and specifically there may be mentioned sucrose fatty acid esters, glycerin fatty acid esters, sorbitan fatty acid esters, propylene glycol fatty acid esters, polyglycerin fatty acid esters, lecithin, agar, carrageenan, furcellan, tamarind seed polysaccharides, tara gum, karaya gum, soybean hemicellulose, pectin, xanthan gum, sodium alginate, tragacanth gum, guar gum, locust bean gum, pullulan, gelan gum, gum Arabic, gelatin, casein sodium, various starches, various celluloses, and the like.

### Examples

The present invention will now be explained in further detail through the following examples and comparative examples of the second mode.

### Simple evaluation of chocolate beverages (Example 6, Comparative Example 5)

### Example 6

The 4 different water-soluble dietary fibers (A-D) prepared according to the first mode were used for preparation of chocolate beverages each having the composition shown in Table 9 below. Specifically, 110 parts of water was added to and mixed with 5 parts of cocoa powder, 13 parts of sugar, 5 parts of skim milk powder and 5 parts of 5% cacao husk-derived water-soluble dietary fiber, and the mixture was heated to 80°C while stirring with a homomixer for pre-emulsification, after which it was homogenized under a pressure of 150 kgf/cm² using a homogenizer. It was then filled into a bottle and sterilized at 121°C for 30 minutes to obtain a chocolate beverage. The chocolate beverages obtained in this manner were allowed to stand for 1 week at ordinary temperature and observed, giving the results shown in Table 10 below. As an overall evaluation, ○ was assigned for good stability, Δ for somewhat poor stability and × for poor stability.

### Comparative Example 5

A chocolate beverage was prepared in the same manner as Example 6, except that water was added instead of water-soluble dietary fiber as a stabilizer.

**Table 9**

| | |
|---|---|
| Cocoa powder | 5 parts |
| Sugar solution | 13 parts |
| Skim milk powder | 5 parts |
| water-soluble dietary fiber (5% solution) | 5 parts |
| Water | 110 parts |

As shown in Table 10 below, the beverages prepared using water-soluble dietary fibers (B) to (D) purified after extraction gave highly satisfactory results, while the beverage prepared using water-soluble dietary fiber (A) which was not purified after extraction was slightly inferior.

**Table 10 Chocolate beverage stability**

| Component | Comp. Ex. 5 | Example 6 | ← | ← | ← |
|---|---|---|---|---|---|
| | | (A) | (B) | (C) | (D) |
| Precipitation | present | slightly present slightly | absent | absent | absent |
| Top separation | present | present | absent | absent | absent |
| Aggregation | slight aggregation | slight aggregation | absent | absent | absent |
| Overall evaluation | × | Δ | ○ | ○ | ○ |

### Chocolate beverage stability test (Examples 7-9, Comparative Examples 6-8)

### Example 7

After adding water to 40 parts of cocoa powder, 100 parts of sugar, 40 parts of skim milk powder and 20 parts of cacao husk-derived water-soluble dietary fiber (B) to a total of 1000 parts, the mixture was heated to 80°C while stirring with a homomixer for pre-emulsification, after which it was homogenized under a pressure of 300 kgf/cm² using a homogenizer. It was then filled into a can and sterilized at 121°C for 30 minutes to obtain a chocolate beverage. When the chocolate beverage obtained in this manner was allowed to stand for 2 weeks at ordinary temperature, and the can was opened and the state of suspension observed, no separation or precipitation of the oil portion was found. Upon taste testing, the beverage was found to have low viscosity and a satisfactory light and refreshing feel.

### Example 8

A chocolate beverage was obtained in the same manner as Example 7, except for changing the 20 parts of water-soluble dietary fiber (B) to 10 parts of water-soluble dietary fiber (B) and 0.2 part of xanthan gum, and when it was observed after 2 weeks it was found to maintain a satisfactory condition without separation of oils or precipitation, as in Example 7.

### Example 9

A chocolate beverage was obtained in the same manner as Example 7, except for changing the 20 parts of water-soluble dietary fiber (B) to 10 parts of water-soluble dietary fiber (B) and 5.0 parts of crystalline cellulose, and when it was observed after 2 weeks it was found to maintain a satisfactory condition without separation of oils or precipitation, as in Example 7.

### Comparative Example 6

A chocolate beverage was obtained in the same manner as Example 7, except that the 20 parts of water-soluble dietary fiber (B) was not added, and observation after 2 weeks revealed separation of oils and a layer of precipitation at the bottom of the can.

### Comparative Example 7

A chocolate beverage was obtained in the same manner as Example 7, except for changing the 20 parts of water-soluble dietary fiber (B) to 0.2 part of xanthan gum, and observation after 2 weeks revealed separation of oils and a layer of precipitation at the bottom of the can.

### Comparative Example 8

A chocolate beverage was obtained in the same manner as Example 7, except for changing the 20 parts of water-soluble dietary fiber (B) to 5.0 parts of crystalline cellulose, and observation after 2 weeks revealed separation of oils and a layer of precipitation at the bottom of the can.

### Chocolate beverage stability test (Examples 10 and 11, Comparative Examples 9 and 10)

### Example 10

After adding 765 parts of water to 100 g of sugar, 40 g of skim milk powder and 20 parts of water-soluble dietary fiber (B), the mixture was heated while stirring with a homomixer, and when the temperature reached 50°C or above, a premelted mixture of 75 parts of cacao mass and 0.5 part of lecithin was added and the mixture was heated to 80°C for pre-emulsification, after which it was homogenized under a pressure of 150 kgf/cm² using a homogenizer. It was then filled into a can and sterilized at 121°C for 30 minutes to obtain a chocolate beverage. When the chocolate beverage obtained in this manner was allowed to stand for 2 weeks at ordinary temperature, and the can was opened and the state of suspension observed, no separation or precipitation of the oil portion was found. Upon taste testing, the beverage was found to have low viscosity and a satisfactory light and refreshing feel, with no rough mouthfeel.

### Example 11

A chocolate beverage was obtained in the same manner as Example 10, except for changing the 20 parts of water-soluble dietary fiber (B) to 10 parts of water-soluble dietary fiber (B) and 3 parts of sucrose fatty acid ester. When the beverage was allowed to stand for 2 weeks at ordinary temperature and observed, it was found to maintain a satisfactory condition without separation of oils or precipitation, as in Example 10.

### Comparative Example 9

A chocolate beverage was obtained in the same manner as Example 10, except that no water-soluble dietary fiber (B) was added. Observation of the beverage after 2 weeks of standing at ordinary temperature revealed oil separation and precipitation at the top.

### Comparative Example 10

A chocolate beverage was obtained in the same manner as Example 7, except for changing the water-soluble dietary fiber (B) to 3 parts of sucrose fatty acid ester. Observation after 2 weeks revealed oil separation and precipitation at the top.

### [Third mode]

According to a third mode, the cacao husk-derived water-soluble dietary fiber provides a viscosity of 10-500 cPs, preferably 30-300 cPs and more preferably 40-200 cPs at 20°C in aqueous solution at 10% concentration.

When the water-soluble dietary fiber is used as a coating agent, it is preferably added at 0.1-50 wt% and more preferably 0.5-30 wt% with respect to the total coating agent solution. It may also be used outside of these ranges when used in a sugar coating, but depending on the amount of sugar, a small amount of fiber may result in low coating strength or cracking and flaking of the sugar coating, while an excessive amount of fiber will tend to lengthen the drying time, and therefore the fiber is preferably used within the ranges specified above.

The cacao husk-derived water-soluble dietary fiber may be used alone as a coating agent but, if necessary, there may also be added plasticizers, pigments, dispersing agents, solvents, taste substances, coloring agents, preservatives, defoaming agents and the like, or it may be used suitably together with other coating agents, for example, polysaccharides such as guar gum, tragacanth gum, xanthan gum, carrageenan, tamarind gum, locust bean gum, agar, gum Arabic, processed starch, hydroxypropylmethyl cellulose and pullulan or proteins such as gelatin.

The method of using the water-soluble dietary fiber of the invention as a coating agent may involve spraying or immersion after preparing a solution of the dietary fiber. As apparatuses to be used for spray coating there may be mentioned, specifically, hi-coaters, aqua coaters, flow coaters, Spira-flows, rotor container-equipped fluidized bed apparatuses (products of Freund Industries) and the like. For immersion, any apparatus having an immersion layer and a drier may be used.

### Examples

The present invention will now be explained in further detail through the following examples and comparative examples of the third mode.

### Evaluation of film coating strength (Example 12, Comparative Example 11)

### Example 12

In order to measure the coating strength, a film was formed using the aforementioned four different water-soluble dietary fibers (A-D) obtained according to the first mode, and the strength thereof was measured. After preparing a 20% aqueous solution of each water-soluble dietary fiber and smearing it onto an OHP sheet to a film thickness of 250 µm, it was dried for 24 hours at 60% humidity, 20°C to obtain a film. The tensile strength (kgf/cm²) and Young's modulus (kgf/cm²) of each obtained film was measured with a Rheoner. The results are shown below in Table 11.

### Comparative Example 11

A film was prepared in the same manner as Example 12, except that pullulan was added as the stabilizer instead of water-soluble dietary fiber. The results are shown in Table 11.

**Table 11 Film strength**

| Component | Comp. Ex. | Example 12 | ← | ← | ← |
|---|---|---|---|---|---|
| | 11 | (A) | (B) | (C) | (D) |
| Tensile strength (kgf/cm²) | 485.2 | 514.5 | 521.0 | 535.8 | 526.6 |
| Young's modulus (kgf/cm²) | 11,700 | 10,100 | 10,500 | 10,800 | 10,200 |

According to these results, the films obtained using cacao husk-derived water-soluble dietary fiber exhibited higher strength than the pullulan film, which is a common high strength film. Among the water-soluble dietary fiber films, the purified product exhibited the highest film strength.

### Confirmation of glaze effect (Example 13, Comparative Examples 12 and 13)

### Example 13

After freezing a whole sardine at -30°C, it was glaze treated using 2% water-soluble dietary fiber (B). It was then stored for 4 months at -20°C, and freezer burn (oxidation) on the surface of the frozen fish was periodically observed. The observation results are shown in Table 12 below.

### Comparative Example 12

Glaze treatment (water glaze treatment) was carried out in exactly the same manner as Example 13, except that water was used instead of the 2% water-soluble dietary fiber (B), and the periodic changes were observed.

### Comparative Example 13

Example 13 was repeated, freezing the fish at -20°C but without glaze treatment, and the periodic changes were observed.

**Table 12 Frozen fish surface freezer burn (oxidation)**

| Storage period | Example 13 Component (B) | Comparative Example 12 | Comparative Example 13 |
|---|---|---|---|
| 1 month | No freezer burn | No freezer burn | Freezer burn, surface drying |
| 2 months | No freezer burn | No freezer burn | Freezer burn, surface drying |
| 3 months | No freezer burn | Freezer burn, slight surface drying | Freezer burn, surface drying |
| 4 months | Slight freezer burn, surface drying | Freezer burn, surface drying | Freezer burn, surface drying |

According to the results, the fish glaze treated with cacao husk-derived water-soluble dietary fiber showed a greater effect of preventing progressive freezer burn of the fish, in frozen storage, and drying of the surface was prevented for an extended period.

### Dried sweet sake-seasoned sardine

### (Examples 14 and 15 and Comparative Example 14)

Sweet sake seasonings were prepared having the compositions shown in Table 13

**Table 13 Seasoning composition (units: parts)**

| | Example 14 | Example 15 | Comp. Ex. 14 |
|---|---|---|---|
| Soy sauce | 6 | 6 | 6 |
| Sweet sake | 0 | 3 | 3 |
| Sugar | 0 | 0 | 1 |
| Water-soluble dietary fiber (B) | 4 | 1 | 0 |

### Example 14

A seasoning was prepared with 6 parts of soy sauce and 4 parts of water-soluble dietary fiber (B). A sardine was immersed in the seasoning to prepare a sweet sake-seasoned sardine (25°C, 50% humidity, 12 hrs), which was then stored at 40°C. Upon observing the gloss of the sample after 10 days, the lipids were extracted with hexane and the peroxide value (POV) was measured. The results are shown in Table 14.

### Example 15

A sweet sake-seasoned sardine was prepared in exactly the same manner as Example 14, except that the seasoning was prepared with 6 parts of soy sauce, 3 parts of sweet sake and 1 part of water-soluble dietary fiber (B), after which the luster was observed and the POV was measured. The results are shown in Table 14.

### Comparative Example 14

A sweet sake-seasoned sardine was prepared in exactly the same manner as Example 14, except that the seasoning was prepared with 6 parts of soy sauce, 3 parts of sweet sake and 1 part of sugar, after which the luster was observed and the POV was measured. The results are shown in Table 14.

**Table 14**

| | Luster after 10 days | Measured POV value | |
|---|---|---|---|
| | | Storage for 0 days | Storage for 10 days |
| Example 14 | good | 6.5 | 45.2 |
| Example 15 | good | 4.6 | 76.8 |
| Comp. Ex. 14 | good | 7.1 | 156.9 |

According to these results, addition of cacao husk-derived water-soluble dietary fiber to sweet sake seasoning for sardines inhibited permeation of oxygen and prevented increase in the POV. In addition, sufficient gloss was maintained in the sweet sake-seasoned sardine even when water-soluble dietary fiber was used in place of sweet sake, and the gloss was equivalent to the sardine prepared in Comparative Example 14 which contained no water-soluble dietary fiber in the seasoning.

### Chocolate dessert (Example 16, Comparative Examples 15 and 16)

Sugar coating compositions for sugar-coated chocolate desserts were prepared having the compositions shown in Table 15 below.

**Table 15 Sugar coating compositions (units: parts)**

| Component | Composition | Composition | Composition |
|---|---|---|---|
| | (A) | (B) | (C) |
| Water-soluble dietary fiber (B) | 10 | 0 | 0 |
| Gum Arabic | 0 | 10 | 0 |
| Foodtex | 0 | 0 | 10 |
| Sugar | 65 | 65 | 65 |
| Water | 25 | 25 | 25 |

### Example 16

Sugar coating composition (A) (10 parts water-soluble dietary fiber (B), 65 parts sugar, 25 parts water) was used to prepare a chocolate dessert. The sugar coating composition (A) was sprinkled by an ordinary method over chocolate balls (7 mm diameter) loaded in a rotary boiler, and then powdered sugar was sprinkled thereover and adhered onto the surface and blow dried, after which the sugar coating composition (A) was again sprinkled thereover and the powdered sugar was sprinkled thereover and adhered thereto and blow dried. This procedure was repeated 4 times, and finally shellac was applied to obtain a sugar-coated chocolate dessert. The results of evaluating the coatability, flaking of sugar coating, cracking and drying properties are shown in Table 16 below.

### Comparative Example 15

A chocolate dessert was prepared in exactly the same manner as Example 16, except that sugar coating composition (B) (10 parts gum Arabic (Kishida Chemical Co., Ltd.), 65 parts sugar, 25 parts water) was used.

### Comparative Example 16

A chocolate dessert was prepared in exactly the same manner as Example 16, except that sugar coating composition (C) (10 parts Foodtex (processed starch, product of Matsutani Chemical Industry Co., Ltd.), 65 parts sugar, 25 parts water) was used.

**Table 16**

| Evaluation | Example 16 | Comp. Ex. 15 | Comp. Ex. 16 |
|---|---|---|---|
| Coatability | good | good | fair |
| Flaking of sugar coating | none | none | none |
| Cracking of sugar coating | none | slight | significant |
| Drying property | high | high | high |

According to these results, addition of cacao husk-derived water-soluble dietary fiber to sugar coating compositions as coating agents for sugar-coated chocolate desserts gave satisfactory sugar-coated chocolate desserts with less cracking than when using gum Arabic.

### Coated soft capsules (Examples 17-20, Comparative Examples 17-19)

Coated soft capsules were prepared, by the method described below, and stored at 20°C for 4 weeks and, then, the effects on capsule surface gloss, peeling and hollowing were examined. The results are shown in Table 17 below.

Sesame oil-encapsulating soft capsules were produced by the rotary die method. Specifically, gelatin, glycerin, titanium oxide and purified water were mixed in a proportion of 100:20:2:80 (weight ratio) and heated, to prepare a gelatin solution for capsules. The obtained gelatin solution was put through a soft capsule machine to make a sheet. A #2.5 round die was then used for encapsulated molding of sesame oil as the filling liquid, and the resulting molded bodies were dried by ventilation for about 24 hours to obtain soft capsules. The weight of the contents of the soft capsules was 100 mg, and the capsule weight was 60 mg.

### Example 17

A coating solution was prepared by dispersing water-soluble dietary fiber (B) in an ethanol/water mixture at 5% with respect to the capsules. After placing 2000 soft capsules in a ventilating dry coater, the coating dispersion was sprayed and dried to obtain coated soft capsules.

### Example 18

Coated soft capsules were obtained in exactly the same manner as Example 17, except that the coating solution was prepared by dispersing HPMC (hydroxypropylmethyl cellulose) in the ethanol/water mixture at 1.0% with respect to the capsules, in addition to the water-soluble dietary fiber (B).

### Example 19

Coated soft capsules were obtained in exactly the same manner as Example 17, except that the coating solution was prepared by dispersing kaolin in the ethanol/water mixture at 0.1% with respect to the capsules, in addition to the water-soluble dietary fiber (B).

### Example 20

Coated soft capsules were obtained in exactly the same manner as Example 17, except that the coating solution was prepared by dispersing silicic anhydride in the ethanol/water mixture at 0.1% with respect to the capsules, in addition to the water-soluble dietary fiber (B).

### Comparative Example 17

Coated soft capsules were obtained in exactly the same manner as Example 17, except that the coating solution was prepared by dispersing HPMC in the ethanol/water mixture at 1.0% with respect to the capsules, instead of the water-soluble dietary fiber (B).

### Comparative Example 18

Coated soft capsules were obtained in exactly the same manner as Example 17, except that the coating solution was prepared by dispersing kaolin in the ethanol/water mixture at 0.1% with respect to the capsules, instead of the water-soluble dietary fiber (B).

### Comparative Example 19

Coated soft capsules were obtained in exactly the same manner as Example 17, except that the coating solution was prepared by dispersing silicic anhydride in the ethanol/water mixture at 0.1% with respect to the capsules, instead of the water-soluble dietary fiber (B).

**Table 17**

| | | Gloss | Peeling | Hollowing |
|---|---|---|---|---|
| Example 17 | Water-soluble dietary fiber | yes | no | no |
| | (5%) | | | |
| Example 18 | Water-soluble dietary fiber | no | no | no |
| | (5%) + HPMC (1.0%) | | | |
| Example 19 | Water-soluble dietary fiber | no | no | no |
| | (5%) + kaolin (0.1%) | | | |
| Example 20 | Water-soluble dietary fiber | no | no | no |
| | (5%) + Silicic anhydride (0.1%) | | | |
| Comp.Ex.17 | HPMC (1.0%) | no | no | yes |
| Comp.Ex.18 | Kaolin (0.1%) | no | no | yes |
| Comp.Ex.19 | Silicic anhydride (0.1%) | no | no | yes |

| | | | | |
|---|---|---|---|---|
| (The values are weight percentages with respect to the capsules) | | | | |

As these results clearly show, addition of cacao husk-derived water-soluble dietary fiber at 5% in the coated soft capsules prevented peeling and hollowing of the capsules. The effect was more satisfactory than when HPMC, kaolin or silicic anhydride was used alone. Hollowing of the capsule surfaces was thus prevented by using these with water-soluble dietary fiber.

### Coating of tablets (Examples 21, Comparative Examples 20-22)

### Example 21

A Hicoater HC-48N tablet coating apparatus (product of Freund Industrial Co., Ltd.) was used for tablet coating. Cacao husk-derived water-soluble dietary fiber (B) was used at 10.0% to coat 3.5 kg of 8 mmφ lactose tablets. The supply air temperature was 65°C, the spray pressure was 3.0 kg/cm², the container diameter was 48 cm, the spraying speed from the spray gun was 20 ml/min, the blowing volume was 2.8 m³/min and the container rotation speed was 15 rpm. The coating coverage was 6.5% (per tablet). The coating workability was satisfactory, and hollow-free smooth coatings were obtained. In addition, no stickiness or stringiness was observed. As a result of a first solution disintegration test according to the Japanese Pharmacopoeia, the uncoated tablets disintegrated in 2 minutes and 30 seconds, while the coated tablets disintegrated in 5 minutes and 45 seconds.

### Comparative Example 20

Coated tablets were obtained in exactly the same manner as Example 21, except that gum Arabic was used instead of the cacao husk-derived water-soluble dietary fiber (B). The coated tablets had strong cohesiveness and the coatability was extremely poor.

### Comparative Example 21

Coated tablets were obtained in exactly the same manner as Example 21, except that pullulan was used instead of the cacao husk-derived water-soluble dietary fiber (B). The pullulan produced notable cohesiveness during coating, such that the tablets bound together and the coatability was extremely poor.

### Comparative Example 22

Coated tablets were obtained in exactly the same manner as Example 21, except that a dispersion of 8% zein in 80% aqueous ethanol was used instead of the cacao husk-derived water-soluble dietary fiber (B). The coatability was satisfactory, allowing formation of smooth coated tablets with no cracking or hollowing, but the tablets did not disintegrate even after 60 minutes of a first solution disintegration test, and they were therefore unsuitable as enteric coated tablets.

### [Fourth mode]

"Starch-containing food products" according to a fourth mode of the invention are food products prepared by cooking, steaming or boiling dough prepared using wheat flour as the raw material, such as cookies, biscuits, crackers, sponge cakes, Chinese buns and various types of bread, or dough composed mainly of starch, such as rice cakes.

When the cacao husk-derived water-soluble dietary fiber of the invention is used as an age resistor, the water-soluble dietary fiber is added at 0.1-15 parts by weight, preferably 0.2-10 parts by weight and more preferably 0.5-7 parts by weight with respect to 100 parts by weight of the starch as the main raw material.

The water-soluble dietary fiber may be pre-added to the starch raw material, or it may be added together with other raw materials such as water and mixed therewith, and then cooked, steamed or boiled, according to the ordinary methods for various food products, to obtain different food products.

The water-soluble dietary fiber of the invention may be used alone as an age resistor, but it may also be used in combination with fats and oils, margarine or emulsifiers such as sugar esters. It may also be used together with various gum substances, and proteins or their hydrolysates, used as viscosity enhancers.
Examples of viscosity enhancers include polysaccharides such as agar, carrageenan, furcellan, guar gum, locust bean gum, tamarind seed polysaccharides, tara gum, gum Arabic, tragacanth gum, karaya gum, pectin, xanthan gum, pullulan, gelan gum and the like, or water-soluble proteins such as gelatin, albumin and casein sodium.

Starch-containing food products according to the invention also include food products obtained by addition of cacao husk-derived water-soluble dietary fiber to dough materials for starch-containing food products, followed by cooking, steaming or boiling and then refrigeration or freezing, as well as cooked starch-containing food products obtained by heating such food products in a microwave oven prior to consumption. This provides a notable effect of inhibiting the drawback of conventional products which, when heated in a microwave oven, not only exhibit poor biting texture, but also undergo shrinkage as the product ages (hardens) rapidly upon cooling, producing wrinkles on the surface and losing their product value.

### Examples

The present invention will now be explained in further detail through the following examples and comparative examples of the fourth mode.

### Preparation of water-soluble dietary fibers (A) to (D)

The preparation was as described above (first mode).

### Preparation of water-soluble dietary fiber (J)

Water-soluble dietary fiber (J) was obtained in exactly the same manner as water-soluble dietary fiber (B), except that the extraction was carried out at a temperature of 80°C and a period of 180 minutes.

### Preparation of water-soluble dietary fiber (K)

Water-soluble dietary fiber (K) was obtained in exactly the same manner as water-soluble dietary fiber (B), except that the extraction was carried out at a temperature of 120°C and a period of 60 minutes.

### Preparation of water-soluble dietary fiber (L)

Water-soluble dietary fiber (L) was obtained in exactly the same manner as water-soluble dietary fiber (B), except that the extraction was carried out at a temperature of 130°C and a period of 60 minutes.

Table 18 below shows the results of analyzing each of the water-soluble dietary fibers obtained above. The total sugar was measured by phenol sulfate method, the uronic acid content was measured by the Blumenkrantz method, and the average molecular weight was measured by gel filtration HPLC using a TSK-GEL G-5000PWXL column, with standard pullulan (Showa Denko Co., Ltd.) as the standard substance.

**Table 18 Composition (%)**

| Component | (J) | (K) | (L) |
|---|---|---|---|
| Moisture | 6.5 | 4.4 | 5.7 |
| Crude protein | 9.6 | 6.0 | 4.2 |
| Crude ash | 18.9 | 11.9 | 15.0 |
| Total sugars | 42.7 | 69.2 | 71.3 |
| Uronic acid | 35.0 | 48.0 | 49.6 |
| Average molecular weight | 155,000 | 210,000 | 152,000 |

### Bracken starch pastry (Example 22, Comparative Example 23)

### Example 22

After mixing 75.0 g of bracken flour (sugar cane starch, product of Harima Food Industries Co., Ltd.), 1.5 g of water-soluble dietary fibers (A) to (D) and (J) to (L) (0.5 part with respect to 100 parts of starch) and 340.0 g of water in a mixer, the mixture was kneaded to transparency while heating on a low flame and shaped while cooling on ice to obtain bracken starch pastry. The starch pastry was stored at 4°C for 48 hours, the hardness resulting from aging of the starch was measured based on gel strength using a rheometer, and the increase in whiteness (whitening) was visually observed. The gel strength of a bracken starch pastry shaped to a 30 mm length, 35 mm width and 25 mm height was measured using a rheometer (NRM-2002J, product of Fudo Kogyo Co., Ltd.) under conditions with an 8 mmφ pressure-sensitive spherical plunger, and a table speed of 30 cm/min. The results are shown in Table 19. In the table, a higher gel strength value indicates greater hardness. The whiteness is represented as "-" for transparent, "±" for somewhat cloudy and "+" for cloudy (whitened).

### Comparative Example 23

Bracken starch pastry was obtained in exactly the same manner as Example 22, except that no water-soluble dietary fiber (A) was added, and the gel strength and whiteness after refrigerated storage were observed.

**Table 19 Storage results for bracken starch pastry (with different storage times (h))**

| | 0 (h) | | 24 (h) | | 48 (h) | |
|---|---|---|---|---|---|---|
| | Gel strength | Whiteness | Gel strength | Whiteness | Gel strength | Whiteness |
| | (g) | | (g) | | (g) | |
| (A) | 48 | - | 85 | - | 105 | ± |
| (B) | 52 | - | 91 | - | 98 | ± |
| (C) | 51 | - | 92 | - | 100 | ± |
| (D) | 45 | - | 84 | - | 112 | ± |
| (J) | 56 | - | 98 | - | 122 | ± |
| (K) | 48 | - | 90 | - | 105 | ± |
| (L) | 50 | - | 88 | - | 114 | ± |
| Comp. Ex. 23 | 50 | - | 141 | + | 364 | + |

| | | | | | | |
|---|---|---|---|---|---|---|
| A higher gel strength indicates greater hardness. The whiteness is represented as "-" for transparent, "±" for somewhat cloudy and "+" for cloudy (whitened). | | | | | | |

Addition of the cacao husk-derived water-soluble dietary fibers (A) to (D), (K) and (L) inhibited progressive hardening and whitening of the bracken starch pastry with refrigerated storage, and no difference in function was found between the water-soluble dietary fibers.

### Sponge cake (Example 23, Comparative Example 24)

Sponge cakes were prepared having the compositions shown in Table 20 below, and the texture and change upon storage were examined. The emulsified oil used was Perming H by Fuji Oil Co., Ltd.

**Table 20 Sponge cake composition (parts by weight)**

| | Example 23 | Comp. Ex. 24-1 | Comp. Ex. 24-2 |
|---|---|---|---|
| Whole egg | 100 | 100 | 100 |
| Sugar | 100 | 100 | 100 |
| Cake flour | 100 | 100 | 100 |
| Water | 35 | 35 | 35 |
| Emulsified oil | 15 | 15 | 15 |
| Baking powder | 2 | 2 | 2 |
| Water-soluble dietary fiber (B) | 1 | 0.05 | 0 |

| | | | |
|---|---|---|---|
| Emulsified oil: Perming H (product of Fuji Oil Co., Ltd.) | | | |

### Example 23

Whole egg and sugar were combined, and then emulsified oil, water, cake flour and baking powder were added in that order, after which water-soluble dietary fiber (B) was added in an amount of 1.3 parts to 100 parts of starch (1.0 part with respect to 100 parts of cake flour) (Example 23) or 0.07 part with respect to 100 parts of starch (0.05 part with respect to 100 parts of cake flour) (Comparative Example 24-1), and finally the specific weight was adjusted to 0.4 and the dough was baked at 170°C for 20 minutes. The results immediately after baking and cooling are shown in Table 21, and the results after storage at 20°C for 7 days are shown in Table 22. These results represent the evaluation by 20 panelists on a 5-level scale, with a higher value indicating a better evaluation. For the results shown in Table 22, the samples were stored for 7 days in a sealed container at 20°C. To determine the hardness (g/cm²), the stress upon 2/3 compression of the sample was measured using a rheometer (product of Fudo Kogyo Co., Ltd.), with a 40 mm diameter plunger and a table raising rate of 50 mm/min.

### Comparative Example 24-2

Sponge cake was prepared in exactly the same manner as Example 23, except that no water-soluble dietary fiber (B) was added.

**Table 21 Results of evaluation immediately after baking and cooling sponge cake**

| Sample | Flavor | Structure | Texture | Rise |
|---|---|---|---|---|
| Example 23 | 4.8 | 4.6 | 4.2 | 4.1 |
| Comp. Ex. 24-1 | 4.5 | 4.1 | 3.8 | 4.0 |
| Comp. Ex. 24-2 | 4.4 | 3.8 | 3.4 | 4.1 |

| | | | | |
|---|---|---|---|---|
| Evaluated by 20 panelists on a 5-level scale, with 5 being the highest. | | | | |

**Table 22 Change in sponge cake after storage for 7 days at 20°C**

| Days stored | | Hardness (g/cm²) | Moisture (%) |
|---|---|---|---|
| Example 23 | 0 | 45.8 | 34.4 |
| | 7 | 72.4 | 30.3 |
| Comp. Ex. 24-1 | 0 | 55.0 | 36.2 |
| | 7 | 108.3 | 30.5 |
| Comp. Ex. 24-2 | 0 | 59.5 | 35.4 |
| | 7 | 114.6 | 31.8 |

When the cacao husk-derived water-soluble dietary fiber was added at 1.3 parts with respect to 100 parts of starch (1 part with respect to 100 parts of cake flour), the flavor was good, the structure was improved and hardening was prevented, such that little change occurred after storage (Example 23). However, when no water-soluble dietary fiber was added, or when the amount of addition was lower, hardening was not prevented and the results were not satisfactory (Comparative Examples 24-1, 24-2).

### Cookies (Example 24, Comparative Example 25)

Cookies were prepared having the compositions shown in Table 23 below, and the texture was examined.

**Table 23 Cookie composition (parts by weight)**

| | Example 24-1 | Example 24-2 | Comp. Ex. 25 |
|---|---|---|---|
| Cake flour | 100.0 | 100.0 | 100.0 |
| Refined sugar | 40.0 | 40.0 | 40.0 |
| Salt-free butter | 50.0 | 50.0 | 50.0 |
| Egg yolk | 10.0 | 10.0 | 10.0 |
| Baking powder | 1.0 | 1.0 | 1.0 |
| Vanilla essence | 0.2 | 0.2 | 0.2 |
| Water-soluble dietary fiber (B) | 1.0 | 5.0 | 0.0 |

### Example 24

The salt-free butter and refined sugar were combined and stirred for 3 minutes, the egg yolk and flavoring were added, and then a sifted mixture of the cake flour, baking powder and the water-soluble dietary fiber (B) at 1.3 parts with respect to 100 parts of starch (1.0 part with respect to 100 parts of cake flour) (Example 24-1) or 6.7 parts with respect to 100 parts of starch (5.0 parts with respect to 100 parts of cake flour) (Example 24-2) was added thereto. After further stirring the mixture, it was allowed to stand in a refrigerator for 1 hour, and then cut out and baked at 180°C. The condition immediately after baking and cooling is shown in Table 24. The results represent the evaluation by 20 panelists on a 5-level scale, with a higher value indicating a better evaluation.

### Comparative Example 25

Cookies were prepared in exactly the same manner as Example 24, except that no water-soluble dietary fiber (B) was added.

**Table 24 Results for cookies immediately after baking and cooling**

| | Flavor | Structure | Texture | Hardness |
|---|---|---|---|---|
| Example 24-1 | 4.6 | 4.6 | 3.8 | 3.5 |
| Example 24-2 | 4.3 | 4.1 | 3.7 | 3.8 |
| Comp. Ex. 25 | 4.2 | 3.4 | 2.7 | 4.1 |

| | | | | |
|---|---|---|---|---|
| Evaluated by 20 panelists on a 5-level scale, with 5 being the highest. | | | | |

As the above results clearly show, addition of the water-soluble dietary fiber to cookies preserved the smoothness and improved the texture.

### Madeleine cakes (Example 25, Comparative Example 26)

Madeleine cakes were prepared having the compositions shown in Table 25 below, and the texture and change after storage were examined.

**Table 25 Madeleine cake composition (parts by weight)**

| | Example | Example | Comp. Ex. | Comp. Ex. |
|---|---|---|---|---|
| | 25-1 | 25-2 | 26-1 | 26-2 |
| Cake flour | 100.0 | 100.0 | 100.0 | 100.0 |
| Refined sugar | 80.0 | 80.0 | 80.0 | 80.0 |
| Baking powder | 2.0 | 2.0 | 2.0 | 2.0 |
| Salt-free butter | 100.0 | 100.0 | 100.0 | 100.0 |
| Whole egg | 120.0 | 120.0 | 120.0 | 120.0 |
| Salt | 0.2 | 0.2 | 0.2 | 0.2 |
| Lemon juice | 20.0 | 20.0 | 20.0 | 20.0 |
| Lemon essence | 0.2 | 0.2 | 0.2 | 0.2 |
| Water-soluble dietary fiber (B) | 1.0 | 5.0 | 20.0 | 0.0 |

### Example 25

After stirring the whole egg and refined sugar for 5 minutes, the cake flour, baking powder and salt were added, and then a sifted mixture of the water-soluble dietary fiber (B) was added at 1.3 parts with respect to 100 parts of starch (1.0 part with respect to 100 parts of cake flour) (Example 25-1) or 6.5 parts with respect to 100 parts of starch (5.0 parts with respect to 100 parts of cake flour) (Example 25-2) and the mixture was stirred. Next, the flavoring, lemon juice and butter were added and mixed therewith, and the mixture was poured into a cup and baked in an oven at 200°C. Table 26 shows the results of evaluating the texture immediately upon cooling after baking, and after storage at 20°C for 3 days. The results represent the evaluation by 20 panelists on a 5-level scale, with a higher value indicating a better evaluation.

### Comparative Example 26-1

Madeleine cakes were prepared in exactly the same manner as Example 25, except that the water-soluble dietary fiber (B) was added at 26.7 parts with respect to 100 parts of starch (20.0 parts with respect to 100 parts of cake flour).

### Comparative Example 26-2

Madeleine cakes were prepared in exactly the same manner as Example 25, except that no water-soluble dietary fiber (B) was added

**Table 26 Evaluation results for baked madeleine cakes**

| Sample | Flavor | | Structure | | Texture | | Rise | | Smoothness | |
|---|---|---|---|---|---|---|---|---|---|---|
| Days stored | 0 | 3 | 0 | 3 | 0 | 3 | 0 | 3 | 0 | 3 |
| Example 25-1 | 4.4 | 4.0 | 3.8 | 3.5 | 3.7 | 3.4 | 3.7 | 3.5 | 3.8 | 3.5 |
| Example 25-2 | 4.2 | 3.8 | 3.2 | 2.8 | 3.1 | 2.7 | 3.1 | 2.9 | 3.1 | 2.7 |
| Comp. Ex. 26-1 | 3.1 | 2.8 | 1.5 | 1.2 | 2.1 | 1.6 | 1.2 | 1.1 | 2.2 | 1.8 |
| Comp. Ex. 26-2 | 4.0 | 3.5 | 2.9 | 1.8 | 2.4 | 1.8 | 3.5 | 3.3 | 2.8 | 1.4 |

| | | | | | | | | | | |
|---|---|---|---|---|---|---|---|---|---|---|
| Evaluated by 20 panelists on a 5-level scale, with 5 being the highest. | | | | | | | | | | |

According to these results, the addition of water-soluble dietary fiber to madeleine cakes at 1.3-6.7 parts with respect to 100 parts of starch resulted in a very soft texture and was therefore effective for improving the dessert texture and, even after storage for 3 days, there was no change in texture and a satisfactory condition was maintained (Example 25). When the water-soluble dietary fiber was added at 26.7 parts with respect to 100 parts of starch (20.0 parts with respect to 100 parts of cake flour: Comparative Example 26-1), the cake did not rise and the texture was undesirable.

### Pancakes (Example 26, Comparative Example 27)

Pancakes were prepared having the compositions shown in Table 27 below.

**Table 27 Pancake composition (parts by weight)**

| | Example | Example | Comp. Ex. | Comp. Ex. |
|---|---|---|---|---|
| | 26-1 | 26-2 | 27-1 | 27-2 |
| Cake flour | 100 | 100 | 100 | 100 |
| Baking powder | 2.9 | 2.9 | 2.9 | 2.9 |
| Salt | 1.0 | 1.0 | 1.0 | 1.0 |
| Egg | 40 | 40 | 40 | 40 |
| Sugar | 15 | 15 | 15 | 15 |
| Milk | 80 | 80 | 80 | 80 |
| Butter | 8 | 8 | 8 | 8 |
| Water-soluble dietary fiber (B) | 1.0 | 0.5 | 0.05 | 0.0 |

### Example 26

The egg was placed in a bowl and beaten well, and then the sugar and milk were added and thoroughly mixed therewith. The flour, baking powder and salt were added after presifting, and then the water-soluble dietary fiber (B) was mixed therewith at 1.3 parts with respect to 100 parts of starch (1.0 part with respect to 100 parts of cake flour) (Example 26-1) or 0.67 part with respect to 100 parts of starch (0.5 part with respect to 100 parts of cake flour) (Example 26-2), and the mixture was stirred. Melted butter (slightly cooled) was added thereto, and the batter was shaped and fried (using an NF-HMG21 Hotplate by National, temperature: 160°C, dough weight: 84 g).

### Comparative Example 27-1

Pancakes were prepared in exactly the same manner as Example 26, except that the water-soluble dietary fiber (B) was added at 0.07 part with respect to 100 parts of starch (0.05 part with respect to 100 parts of cake flour).

### Comparative Example 27-2

Pancakes were prepared in exactly the same manner as Example 26, except that no water-soluble dietary fiber (B) was added.

The pancakes were prepared with the compositions and steps described above, and after frozen storage for 10 days, they were heated in a microwave oven. The microwave oven heating was carried out at 500 W, for 1 minute and 30 seconds per pancake, and the condition and texture were evaluated 10 minutes after heating. The evaluation results are shown below in Table 28. The evaluation was based on a 5-level scale (5: very good, 4: good, 3: ordinary, 2: somewhat poor, 1: definitely poor).

**Table 28 Evaluation results for microwave-heated frozen pancakes**

| | Example | Example | Comp. Ex. | Comp. Ex. |
|---|---|---|---|---|
| | 26-1 | 26-2 | 27-1 | 27-2 |
| Condition of dough before frying | 4 | 4 | 4 | 4 |

| Condition after microwave heating | | | | |
|---|---|---|---|---|
| Outer appearance | 4 | 4 | 4 | 4 |
| Texture (biting texture) | 5 | 4 | 1 | 2 |
| Flavor | 4 | 4 | 4 | 4 |

| Change with time | | | | |
|---|---|---|---|---|
| Hardness after 10 minutes | 5 | 4 | 2 | 2 |

| | | | | |
|---|---|---|---|---|
| The evaluation was based on a 5-level scale (5: very good, 4: good, 3: ordinary, 2: somewhat poor, 1: definitely poor). | | | | |

According to these results, addition of the water-soluble dietary fiber to pancakes at 0.67-1.3 parts with respect to 100 parts of starch (0.5-1.0 part with respect to 100 parts of cake flour) improved the texture with microwave thawing after freezing, and inhibited impairment of texture with time. The effect was lower when the water-soluble dietary fiber was added at 0.07 part with respect to 100 parts of starch (0.05 part with respect to 100 parts of cake flour).

### Bread (Example 27, Comparative Example 28)

Hotdog rolls were prepared having the compositions shown in Table 29 below.

**Table 29 Composition of hotdog rolls (parts by weight)**

| | Example 27 | | Comp. Ex. 28 | |
|---|---|---|---|---|
| | Sponge dough | Kneading dough | Sponge dough | Kneading dough |
| Strong wheat flour | 65 | 35 | 65 | 35 |
| Yeast food | 0.1 | - | 0.1 | - |
| Yeast | 3 | 0.5 | 3 | 0.5 |
| Refined sugar | - | 10 | - | 10 |
| Salt | - | 1.5 | - | 1.5 |
| Skim milk powder | - | 2 | - | 2 |
| Whole egg | - | 15 | - | 15 |
| Shortening | - | 10 | - | 10 |
| Water-soluble dietary fiber (B) | - | 1.0 | - | - |
| Water | 40 | 15 | 40 | 15 |

### Example 27

The sponge dough raw materials were combined in a bowl and mixed (low speed for 4 minutes, medium speed for 1 minute (kneading temperature: 25°C)). The mixture was then fermented in a thermostat (27°C, 75% humidity, 2.5 hrs), and all of the ingredients for the kneading dough except for the shortening (including 1.4 part of water-soluble dietary fiber with respect to 100 parts of starch (1.0 part with respect to the strong wheat flour)) was placed in a mixer and blended at low speed for 2 minutes and at medium speed for 2 minutes, after which the shortening was added and the kneading dough was mixed at low speed for 2 minutes and at medium speed for 2 minutes (kneading temperature: 28°C). The flow time was 30 minutes, and the bench time was 15 minutes after separation into 80 g portions. Shaping was carried out with a hotdog roll mold, and after heat drying (38°C, 80% humidity, 70 min), it was baked at 215°C for 11 minutes to obtain bread.

### Comparative Example 28

Hotdog rolls were prepared in exactly the same manner as Example 27, except that no water-soluble dietary fiber (B) was added.

The bread prepared with the compositions and steps described above was allowed to stand overnight and then heated in a microwave oven (600 W, 50 seconds). Table 30 shows the results of evaluating the condition and texture 15 minutes after heating. The evaluation was based on a 5-level scale (5: very good, 4: good, 3: ordinary, 2: somewhat poor, 1: definitely poor).

**Table 30 Evaluation of microwave oven-heated hotdog rolls**

| | Example | Example |
|---|---|---|
| | 26-1 | 26-2 |
| Dough condition before baking | 4 | 4 |

| Condition after microwave oven heating | | |
|---|---|---|
| Outer appearance (shrinkage (wrinkles)) | 5 | 4 |
| Texture (biting texture) | 5 | 4 |
| Flavor | 4 | 4 |

| Change with time | | |
|---|---|---|
| Hardness after 15 minutes | 5 | 3 |
| Overall evaluation | 5 | 4 |

| | | |
|---|---|---|
| The evaluation was based on a 5-level scale (5: very good, 4: good, 3: ordinary, 2: somewhat poor, 1: definitely poor). | | |

According to these results, addition of the water-soluble dietary fiber to hotdog rolls at 1.4 parts to 100 parts of starch improved the outer appearance and texture after microwave heating, and inhibited impairment of the texture with time (Example 27).

### Chinese buns (Example 28, Comparative Example 29)

Chinese buns were prepared having the compositions shown in Table 31 below.

**Table 31**

| | Example | Example | Comp. Ex. | Comp. Ex. |
|---|---|---|---|---|
| | 28-1 | 28-2 | 29-1 | 29-2 |
| Strong wheat flour | 40 | 40 | 40 | 40 |
| Cake wheat flour | 60 | 60 | 60 | 60 |
| Sugar | 10 | 10 | 10 | 10 |
| Salt | 0.5 | 0.5 | 0.5 | 0.5 |
| Baking powder | 1.0 | 1.0 | 1.0 | 1.0 |
| Yeast | 2.5 | 2.5 | 2.5 | 2.5 |
| Margarine | 8 | 8 | 8 | 8 |
| Water | 55 | 55 | 55 | 55 |
| Water-soluble dietary fiber (B) | 1.0 | 0.5 | 0.05 | - |

### Example 28

The raw materials were combined and mixed by the all-in mixing method (low speed for 5 minutes, medium speed for 1 minute (kneading temperature: 26°C). The water-soluble dietary fiber (B) was added at 1.4 parts with respect to 100 parts of total starch (1.0 part with respect to 100 parts of the total of the strong wheat flour and cake wheat flour) (Example 28-1) or 0.7 part with respect to 100 parts of starch (0.5 part with respect to 100 parts of the total wheat flour) (Example 28-2). The mixed dough was fermented at 28°C, 65% humidity for 20 minutes, and after dividing it into 60 g portions, it was allowed to stand for a bench time of 10 minutes and then stuffed with 30 g of Chinese filling, and Chinese buns were shaped. After drying treatment at a temperature of 35°C, 60% humidity, it was steamed in a steamer at 103°C for 12 minutes to obtain Chinese buns.

### Comparative Example 29-1

Chinese buns were prepared in exactly the same manner as Example 28, except that the water-soluble dietary fiber (B) was added at 0.07 part with respect to 100 parts of the total starch (0.05 part with respect to 100 parts of the total of the strong wheat flour and cake wheat flour).

### Comparative Example 29-2

Chinese buns were prepared in exactly the same manner as Example 28, except that no water-soluble dietary fiber (B) was added.

The Chinese buns prepared in the manner described above were stored frozen for 10 days, and then heated in a microwave oven (500 W, 4 minutes, 30 seconds), and the condition and texture were evaluated 10 minutes after heating. The results are shown in Table 32 below. The evaluation was based on a 5-level scale (5: very good, 4: good, 3: ordinary, 2: somewhat poor, 1: definitely poor).

**Table 32 Evaluation results for frozen Chinese buns after microwave heating**

| | Example | Example | Comp.Ex | Comp.Ex |
|---|---|---|---|---|
| | 28-1 | 28-2 | 29-1 | 29-2 |
| Dough condition before baking | 5 | 4 | 4 | 4 |

| Condition after microwave oven heating | | | | |
|---|---|---|---|---|
| Outer appearance (shrinkage (wrinkles)) | 4 | 4 | 4 | 4 |
| Texture (biting texture) | 5 | 4 | 3 | 3 |
| Flavor | 4 | 4 | 4 | 4 |

| Change with time | | | | |
|---|---|---|---|---|
| Hardness after 10 minutes | 5 | 4 | 2 | 2 |

| | | | | |
|---|---|---|---|---|
| The evaluation was based on a 5-level scale (5: very good, 4: good, 3: ordinary, 2: somewhat poor, 1: definitely poor). | | | | |

According to these results, addition of the water-soluble dietary fiber to Chinese buns at 0.7-1.4 parts with respect to 100 parts by weight of starch (0.5-1.0 part with respect to 100 parts of the total of the strong wheat flour and cake wheat flour) improved the outer appearance and texture (biting texture) after microwave oven heating, inhibited hardness of the starch with time and prevented impairment of the texture. The effect was less notable with addition of 0.07 part of water-soluble dietary fiber with respect to 100 parts of starch (0.05 part with respect to 100 parts of the total of the strong wheat flour and cake wheat flour).

### [Fifth mode]

According to a fifth mode, the cacao husk-derived water-soluble dietary fiber is used as a shelf-life extender. The amount of the shelf-life extender will depend on the combination of constituent components in the water-soluble dietary fiber and is not particularly restricted, but for a drink or beverage the water-soluble dietary fiber will generally be added at 0.01-50 wt%, preferably 0.1-20 wt% and more preferably 0.5-5 wt%.

The shelf-life extender may consist of the cacao husk-derived water-soluble dietary fiber alone, but it is preferred to obtain an adequate shelf-life extending effect with the addition of a smaller amount and, therefore, an improved shelf-life extension for foods and beverages may be achieved by using the water-soluble dietary fiber in combinations with one or more known compounds selected from, for example, ethanol, glycine, sorbic acid and benzoic acid and their salts, organic acids such as acetic acid, fumaric acid and adipic acid, and their salts, as well as lower fatty acid esters, sugar esters, polylysine, protamine, lysozyme, mustard extract, horseradish extract, chitosan and phytic acid. Therefore, the shelf-life extender may comprise a mixture of cacao husk-derived hot water extract and the aforementioned known compounds. Although the function expression mechanisms of these known compounds have not been elucidated by the present inventors, the shelf-life extending effect obtained by their use in combination is clear from the results of the examples provided below. Groups of these known compounds will now be explained.

Ethanol and glycine may be any food additive grade source. Salts of sorbic acid and benzoic acid may be sodium or potassium salts, but potassium salts are preferred. Organic acids such as acetic acid, fumaric acid and adipic acid, and their salts, may be any ones of food additive grade. As lower fatty acid esters there may be used esters of glycerin with caproic acid, caprylic acid, capric acid, lauric acid and the like. As sugar esters there may be used any ones approved as food additives. Protamine may be in the form of protamine sulfate, protamine chloride or the like. Mustard extract and horseradish extract may be used in the form of fat-soluble mustard oil. Chitosan is commercially available as a common food additive, and it may be used either free or as an acetic acid salt or glutamic acid salt. Phytic acid is also commercially available as a common food additive.

There are no particular restrictions on the amounts of addition of such known compounds, which are effective when added in small amounts and even more effective when added in larger amounts, but usually they will be added at no greater than 5 wt% in the food or beverage, and the effective content may be determined by appropriate experimentation up to 5 wt% and preferably up to 2-3 wt%.

There are also no particular restrictions on the method of adding the shelf-life extender, and the fiber may be used with or without the aforementioned known compounds. When used with such compounds, they may be added to the food product together with the cacao husk-derived water-soluble dietary fiber, or separately. When the cacao husk-derived water-soluble dietary fiber is used alone as a shelf-life extender, it may be dissolved in water or the like and sprayed onto the food product, or the food product may be immersed in the aqueous solution.

There are no particular restrictions on the timing for addition of the shelf-life extender, and it may be added to the food or beverage by any desired method. The addition may thus be carried out in any step of preparation of the food product, and in a processing step, for example, addition by immersion in the aqueous solution or spraying of the aqueous solution may be carried out after hot shaping and before packaging.

Foods and beverages for which the shelf-life extender may be effectively used are not particularly restricted, but it is particularly effective for food products with a high water content which are difficult to store (food products with a water activity (AW) of 0.80 or greater), such as kneaded marine products (AW = ≥0.80), raw noodles (AW = 0.85), vegetable salads (AW = ≥0.90) and the like. Examples thereof include grains, fruits, vegetables, algae, and household dishes or pickles composed mainly of such materials. More specific examples include kneaded marine products such as kamaboko fish paste, chikuwa fish paste, hanpen (pounded fish cake), fish ham and fish sausages, livestock products such as sausages, bacon, hamburger and meatballs, and beverages such as soy milk or canned juices, coffee, cocoa and the like.

Specifically, the present invention provides a shelf-life extender for foods and beverages comprising a cacao husk-derived water-soluble dietary fiber as an effective ingredient, as well as a method for preserving a food or beverage characterized by adding the water-soluble dietary fiber to the shelf-life extender in an amount of 0.01-50 wt% with respect to the food or beverage.

The extraction temperature in a pH range of 2.5-6.0 is preferably higher than 100°C under pressure. Although the extraction will be completed in a shorter time with higher temperature, an excessively high temperature will adversely affect the flavor and color, and it is therefore preferably no higher than 130°C.

### Examples

The present invention will now be explained in further detail through the following examples and comparative examples of the fifth mode.

### Preparation of whole cacao bean extract

Cacao beans were whole bean roasted and split to an appropriate size with a breaking roll, and then ground with a mixer to obtain whole ground cacao beans. Whole cacao bean extract was obtained in exactly the same manner as with the cacao husk-derived water-soluble dietary fiber (A), except for using the whole ground cacao beans.

### Preparation of cacao mass extract

Cacao beans were whole bean roasted, the beans were split to an appropriate size with a breaking roll, and the split beans were separated by air classification to separate the cacao husks and were then ground with a mixer to obtain a ground cacao mass. Whole cacao bean extract was obtained in exactly the same manner as with the cacao husk-derived water-soluble dietary fiber (A), except for using the whole ground cacao mass.

### Example 29

Cacao husk-derived water-soluble dietary fiber (A) and the aforementioned two types of extracts were used to examine the microbiostatic effects on *Escherichia coli* (*E. coli*) and *Saccharomyces cerevisiae* (*S. cerevisiae*). The dietary fiber and extracts were prepared to 0%, 0.005%, 0.01%, 0.1%, 1.0% and 2.0% aqueous solutions and absorbed onto pre-sterilized 10 mm-diameter filter paper, and 1000 cells of each of the above-mentioned strains were seeded onto the surface and cultured at 30°C for 48 hours in standard agar medium (pH 7.2), after which the halos were observed. The minimum concentration in each medium exhibiting a halo was recorded as the minimum growth inhibiting concentration (%) for each strain. The results are shown in Table 33.

**Table 33**

| Minimum growth inhibiting concentration (%) | | | |
|---|---|---|---|
| Microbial strain | Water-soluble dietary fiber (A) | Whole bean extract | Cacao mass extract |
| *Escherichia coli* | 0.1 % | 2.0 % | 1.0 % |
| *Saccharomyces cerevisiae* | 0.1 % | 2.0 % | 2.0 % |

As clearly seen by the results shown in Table 33, the cacao husk-derived water-soluble dietary fiber exhibited microbiostatic properties superior to the whole cacao bean extract and cacao mass extract.

### Preparation of water-soluble dietary fiber (M)

Water-soluble dietary fiber (M) was obtained in exactly the same manner as the cacao husk-derived water-soluble dietary fiber (A), except that the pH was adjusted to 1.0 before extraction.

### Preparation of water-soluble dietary fiber (N)

water-soluble dietary fiber (N) was obtained in exactly the same manner as the cacao husk-derived water-soluble dietary fiber (A), except that the pH was adjusted to 2.0 before extraction.

### Preparation of water-soluble dietary fiber (O)

Water-soluble dietary fiber (O) was obtained in exactly the same manner as the cacao husk-derived water-soluble dietary fiber (A), except that the pH was adjusted to 2.5 before extraction.

### Preparation of water-soluble dietary fiber (P)

Water-soluble dietary fiber (P) was obtained in exactly the same manner as the cacao husk-derived water-soluble dietary fiber (A), except that the pH was adjusted to 4.5 before extraction.

### Preparation of water-soluble dietary fiber (Q)

Water-soluble dietary fiber (Q) was obtained in exactly the same manner as the cacao husk-derived water-soluble dietary fiber (A), except that the pH was adjusted to 5.5 before extraction.

### Preparation of water-soluble dietary fiber (R)

Water-soluble dietary fiber (R) was obtained in exactly the same manner as the cacao husk-derived water-soluble dietary fiber (A), except that the pH was adjusted to 6.5 before extraction.

### Preparation of water-soluble dietary fiber (S)

Water-soluble dietary fiber (S) was obtained in exactly the same manner as the cacao husk-derived water-soluble dietary fiber (A), except that the pH was adjusted to 7.0 before extraction.

### Preparation of water-soluble dietary fiber (T)

Water-soluble dietary fiber (T) was obtained in exactly the same manner as the cacao husk-derived water-soluble dietary fiber (A), except that the pH was adjusted to 8.0 before extraction.

### Preparation of water-soluble dietary fiber (U)

Water-soluble dietary fiber (U) was obtained in exactly the same manner as the cacao husk-derived water-soluble dietary fiber (A), except that the pH was adjusted to 9.0 before extraction.

### Preparation of water-soluble dietary fiber (V)

Water-soluble dietary fiber (V) was obtained in exactly the same manner as the cacao husk-derived water-soluble dietary fiber (A), except that the pH was adjusted to 10.0 before extraction.

### Preparation of water-soluble dietary fiber (W)

Water-soluble dietary fiber (W) was obtained in exactly the same manner as the cacao husk-derived water-soluble dietary fiber (A), except that the pH was adjusted to 12.0 before extraction.

### Example 30

The above-mentioned cacao husk-derived water-soluble dietary fibers ((M) to (W)) were used to examine the microbiostatic effects against *E*. *coli* and *S*. *cerevisiae* in the same manner as Example 29. The results are shown in Table 34 below.

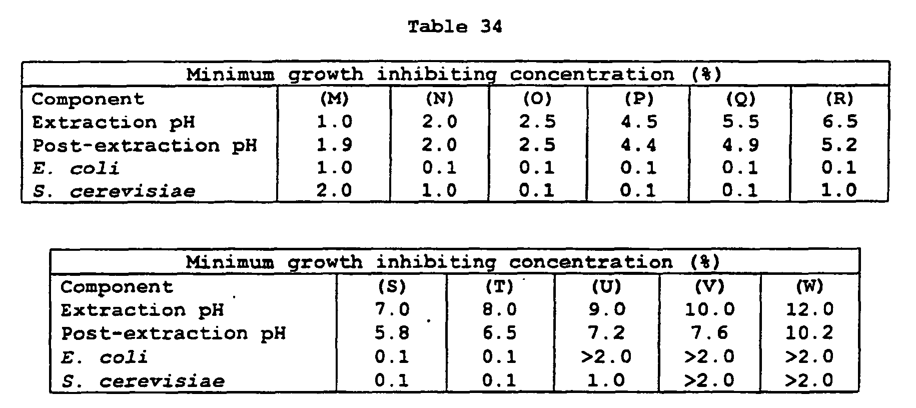

As clearly seen from the results shown in Table 34, a post-extraction pH of between 2.0 and 6.5 results in cacao husk extracts with adequate microbiostatic effects.

### Example 31

Cacao husk derived-water-soluble dietary fibers (A) to (D) (Examples 2-5) were used to examine the microbiostatic effects against *E*. *coli* and *S*. *cerevisiae* in the same manner as Example 29. The results are shown in Table 35 below.

**Table 35**

| Minimum growth inhibiting concentration (%) | | | | |
|---|---|---|---|---|
| Strain | (A) | (B) | (C) | (D) |
| *E. coli* | 0.1 | 0.01 | 0.01 | 0.01 |
| *S. cerevisiae* | 0.1 | 0.1 | 0.1 | 0.1 |

All of the water-soluble dietary fibers (A) to (D) inhibited growth of both strains at concentrations of 0.1% and higher.

### Example 32

The water-soluble dietary fiber (B) has a shelf-life extending effect by itself, but its ability to increase shelf stability when used in combination with other shelf stability increasing substances was also examined. For evaluation of the shelf-life extending property (microbiostatic property), there was used a standard liquid medium (pH 7.2) containing the cacao husk-derived water-soluble dietary fiber of the invention at 0%, 0.5% or 1.0% with suitable amounts of shelf stability increasing substances, and using *Escherichia coli, Aspergillus oryzae* and *Saccharomyces cerevisiae* as the target strains. The shelf-life extending property (microbiostatic property) was judged by inoculating the cells, culturing them at 35°C for 4 days and measuring the turbidity with time. As the turbidity of the medium increases with growth of the cells, a test substance with a microbiostatic property will inhibit the cell growth and result in less turbidity. The turbidity was determined by measuring the absorbance at a wavelength of 610 nm (the spectrophotometer used was PTL-396S by JASCO Co., Ltd.), and the units for the turbidity were based on JIS1010. Specifically, the turbidity of water containing 1 ppm kaolin was defined as 1 unit. The results are shown in Tables 36 to 38.

**Table 36-1 Microbiostatic property on Escherichia coli (1)**

| | | Days stored | | | |
|---|---|---|---|---|---|
| Test group | | 1 | 2 | 3 | 4 |
| Unadded | | 163 | 641 | | |
| Cacao husk-derived dietary fiber | 0.5% | 11 | 69 | 308 | 511 |
| Cacao husk-derived dietary fiber | 1.0% | 13 | 51 | 148 | 298 |
| Ethanol alone | 0.05% | 104 | 441 | | |
| | 0.1% | 112 | 382 | 455 | |
| Ethanol + | 0.05% | 35 | 186 | 417 | |
| Cacao husk-derived dietary fiber (0.5%) | 1.0% | 7 | 114 | 297 | 462 |
| Glycine alone | 0.5% | 101 | 443 | | |
| | 1.0% | 85 | 325 | 501 | |
| Glycine + | 0.5% | 17 | 56 | 247 | 469 |
| Cacao husk-derived dietary fiber (0.5%) | 1.0% | 8 | 17 | 115 | 266 |
| Na ascorbate alone | 0.1% | 115 | 402 | | |
| | 0.5% | 18 | 211 | 315 | 452 |
| Na ascorbate + | 0.1% | 31 | 227 | 466 | |
| Cacao husk-derived dietary fiber (0.5%) | 0.5% | 8 | 25 | 47 | 128 |

**Table 36-2 Microbiostatic property on Escherichia coli (2)**

| | | Days stored | | | |
|---|---|---|---|---|---|
| Test group | | 1 | 2 | 3 | 4 |
| Glycerin fatty acid ester alone | 0.01% | 113 | 415 | | |
| | 0.05% | 47 | 196 | 305 | 481 |
| Glycerin fatty acid ester + | 0.01% | 0 | 55 | 242 | 486 |
| Cacao husk-derived dietary fiber (0.5%) | 0.05% | 0 | 18 | 76 | 214 |
| Salt alone | 1.0% | 141 | 524 | | |
| | 2.0% | 31 | 353 | | |
| Salt + | 1.0% | 25 | 77 | 348 | 519 |
| Cacao husk-derived dietary fiber (0.5%) | 2.0% | 10 | 42 | 307 | 484 |
| Horseradish extract alone | 0.1% | 9 | 93 | 196 | 421 |
| | 0.5% | 8 | 22 | 117 | 245 |
| Horseradish extract + | 0.1% | 5 | 27 | 156 | 223 |
| Cacao husk-derived dietary fiber (0.5%) | 0.5% | 0 | 5 | 36 | 97 |

**Table 37-1 Microbiostatic property on Aspergillus oryzae (1)**

| | | Days stored | | | |
|---|---|---|---|---|---|
| Test group | | 1 | 2 | 3 | 4 |
| Unadded | | 215 | 497 | | |
| Cacao husk-derived dietary fiber | 0.5% | 100 | 285 | 416 | |
| Cacao husk-derived dietary fiber | 1.0% | 53 | 127 | 318 | |
| Ethanol alone | 0.05% | 17 | 128 | 328 | |
| | 0.1% | 10 | 112 | 251 | 475 |
| Ethanol + | 0.05% | 10 | 101 | 274 | |
| Cacao husk-derived dietary fiber (0.5%) | 1.0% | 8 | 100 | 235 | 411 |
| Glycine alone | 0.5% | 126 | 253 | 381 | |
| | 1.0% | 88 | 156 | 374 | |
| Glycine + | 0.5% | 82 | 141 | 274 | 453 |
| Cacao husk-derived dietary fiber (0.5%) | 1.0% | 40 | 119 | 172 | 358 |
| Na ascorbate alone | 0.1% | 107 | 370 | | |
| | 0.5% | 58 | 178 | 422 | |
| Na ascorbate + | 0.1% | 35 | 211 | 403 | |
| Cacao husk-derived dietary fiber (0.5%) | 0.5% | 27 | 63 | 226 | 422 |

**Table 37-2 Microbiostatic property on Aspergillus oryzae (2)**

| | | Days stored | | | |
|---|---|---|---|---|---|
| Test group | | 1 | 2 | 3 | 4 |
| Glycerin fatty acid ester alone | 0.01% | 86 | 417 | | |
| | 0.05% | 53 | 199 | 418 | |
| Glycerin fatty acid ester + | 0.01% | 75 | 223 | 422 | |
| Cacao husk-derived dietary fiber (0.5%) | 0.05% | 35 | 191 | 387 | |
| Salt alone | 1.0% | 99 | 487 | | |
| | 2.0% | 68 | 272 | 429 | |
| Salt + | 1.0% | 75 | 227 | 396 | |
| Cacao husk-derived dietary fiber (0.5%) | 2.0% | 41 | 195 | 247 | 451 |
| Horseradish extract alone | 0.1% | 27 | 81 | 242 | 394 |
| | 0.5% | 5 | 18 | 205 | 293 |
| Horseradish extract + | 0.1% | 20 | 71 | 98 | 213 |
| Cacao husk-derived dietary fiber (0.5%) | 0.5% | 3 | 22 | 70 | 142 |

**Table 38-1 Microbiostatic property on Saccharomyces cerevisiae (1)**

| | | Days stored | | | |
|---|---|---|---|---|---|
| Test group | | 1 | 2 | 3 | 4 |
| Unadded | | 201 | 536 | | |
| | | | | | |
| Cacao husk-derived dietary fiber | 0.5% | 27 | 58 | 113 | 241 |
| Cacao husk-derived dietary fiber | 1.0% | 18 | 20 | 81 | 125 |
| Ethanol alone | 0.05% | 59 | 251 | 487 | |
| | 0.1% | 36 | 182 | 411 | |
| Ethanol + | 0.05% | 20 | 48 | 105 | 193 |
| Cacao husk-derived dietary fiber (0.5%) | 1.0% | 0 | 18 | 75 | 175 |
| Glycine alone | 0.5% | 99 | 282 | 427 | |
| | 1.0% | 75 | 198 | 352 | 503 |
| Glycine + | 0.5% | 11 | 48 | 88 | 175 |
| Cacao husk-derived dietary fiber (0.5%) | 1.0% | 3 | 10 | 48 | 128 |
| Na ascorbate alone | 0.1% | 122 | 391 | | |
| | 0.5% | 76 | 251 | 433 | |
| Na ascorbate + | 0.1% | 19 | 128 | 274 | |
| Cacao husk-derived dietary fiber (0.5%) | 0.5% | 0 | 0 | 42 | 172 |

**Table 38-2 Microbiostatic property on Saccharomyces cerevisiae (2)**

| | | Days stored | | | |
|---|---|---|---|---|---|
| Test group | | 1 | 2 | 3 | 4 |
| Glycerin fatty acid ester alone | 0.01% | 79 | 281 | 485 | |
| | 0.05% | 38 | 107 | 375 | |
| Glycerin fatty acid ester + | 0.01% | 8 | 18 | 139 | 287 |
| Cacao husk-derived dietary fiber (0.5%) | 0.05% | 0 | 15 | 56 | 182 |
| Salt alone | 1.0% | 112 | 425 | | |
| | 2.0% | 24 | 377 | | |
| Salt + | 1.0% | 28 | 51 | 105 | 176 |
| Cacao husk-derived dietary fiber (0.5%) | 2.0% | 8 | 22 | 71 | 110 |
| Horseradish extract alone | 0.1% | 18 | 77 | 116 | 144 |
| | 0.5% | 9 | 17 | 71 | 128 |
| Horseradish extract + | 0.1% | 0 | 13 | 29 | 74 |
| Cacao husk-derived dietary fiber (0.5%) | 0.5% | 0 | 8 | 20 | 36 |

As these results clearly show, growth of all of the strains was inhibited by the cacao husk-derived water-soluble dietary fiber. In addition, the effect was reinforced by combined use of the dietary fiber with substances such as ethanol which also exhibit shelf-life extending effects alone.

### Example 33

To a basic composition comprising 70 g of salt, 200 g of starch, 20 g of sodium glutamate, 30 g of sugar and 2 kg of ice water added to 4 kg of frozen minced fish, there were added each of the preservatives shown in Table 39 (The proportions added with respect to the basic composition are shown in the table, with the proportion of each component represented in terms of weight percentage.), and 100 g of each mixture was filled into a vinylidene chloride film and heated for 30 minutes in hot water at 90°C, after which it was cooled for 40 minutes in running water to obtain kamaboko fish paste (water activity = 0.85) for use as a storage test sample. The storage test was conducted by storing ten samples each per test group in a thermostat at 30°C, and observing the shelf stability visually and evaluating the antiputrefactive property. The evaluation was conducted by observing growth of mold and bacteria. The results are shown in Table 40.

**Table 39**

| Preservative¹⁾ | | A | B | C | D | E | F | G | H |
|---|---|---|---|---|---|---|---|---|---|
| Unadded | | | | | | | | | |
| 1 | (Control) | | 0.5 | | | | | | |
| 2 | ( " ) | | | 0.5 | | | | | |
| 3 | ( " ) | | | | 0.5 | | | | |
| 4 | ( " ) | | | | | 0.05 | | | |
| 5 | ( " ) | | | | | | 0.05 | | |
| 6 | ( " ) | | | | | | | 0.05 | |
| 7 | ( " ) | | | | | | | | 0.5 |
| 8 | (Example) | 0.5 | | | | | | | |
| 9 | ( " ) | 0.5 | 0.5 | | | | | | |
| 10 | ( " ) | 0.5 | | 0.5 | | | | | |
| 11 | ( " ) | 0.5 | | | 0.5 | | | | |
| 12 | ( " ) | 0.5 | | | | 0.05 | | | |
| 13 | ( " ) | 0.5 | | | | | 0.05 | | |
| 14 | ( " ) | 0.5 | | | | | | 0.05 | |
| 15 | ( " ) | 0.5 | | | | | | | 0.5 |

| | | | | | | | | | |
|---|---|---|---|---|---|---|---|---|---|
| Note 1) A: Cacao husk-derived dietary fiber (B) B: Ethanol F: Polylysine C: Glycine G: Lysozyme D: Na ascorbate E: Glycerin fatty acid ester H: Horseradish extract | | | | | | | | | |

**Table 40**

| Preservative¹⁾ | | 1 | 2 | 3 | 4 | 5 | 6 | 7 |
|---|---|---|---|---|---|---|---|---|
| Unadded | | 3/10 | 10/10 | | | | | |
| 1 | (Control) | 0/10 | 5/10 | 10/10 | | | | |
| 2 | ( " ) | 0/10 | 4/10 | 9/10 | 10/10 | | | |
| 3 | ( " ) | 2/10 | 3/10 | 6/10 | 10/10 | | | |
| 4 | ( " ) | 0/10 | 2/10 | 8/10 | 10/10 | | | |
| 5 | ( " ) | 0/10 | 1/10 | 6/10 | 9/10 | 10/10 | | |
| 6 | ( " ) | 1/10 | 3/10 | 8/10 | 10/10 | | | |
| 7 | ( " ) | 0/10 | 1/10 | 3/10 | 6/10 | 8/10 | 10/10 | |
| 8 | (Example) | 0/10 | 0/10 | 1/10 | 3/10 | 5/10 | 8/10 | 10/10 |
| 9 | ( " ) | 0/10 | 0/10 | 1/10 | 2/10 | 4/10 | 10/10 | |
| 10 | ( " ) | 0/10 | 0/10 | 0/10 | 2/10 | 5/10 | 9/10 | 10/10 |
| 11 | ( " ) | 0/10 | 0/10 | 0/10 | 1/10 | 4/10 | 9/10 | 10/10 |
| 12 | ( " ) | 0/10 | 0/10 | 0/10 | 2/10 | 6/10 | 9/10 | 10/10 |
| 13 | ( " ) | 0/10 | 0/10 | 0/10 | 1/10 | 4/10 | 9/10 | 10/10 |
| 14 | ( " ) | 0/10 | 0/10 | 0/10 | 3/10 | 6/10 | 9/10 | 10/10 |
| 15 | ( " ) | 0/10. | 0/10 | 0/10 | 0/10 | 2/10 | 6/10 | 9/10 |

| | | | | | | | | |
|---|---|---|---|---|---|---|---|---|
| The values indicate the number among the 10 samples in which mold or bacteria growth was observed. | | | | | | | | |

As is clearly seen from Table 40, the test groups containing the shelf-life extenders of the invention exhibited satisfactory preserving properties. No adverse effect on quality was found by addition of the products of the invention.

### Example 34

After mixing 500 g of wheat flour, 12 g of salt and 200 ml of water, the mixture was rolled out using a roller and raw noodles were prepared according to a common method. The water activity of the raw noodles was 0.85. They were then subjected to one of the treatments described below and placed in a sterilized dish and covered for a storage test at 35°C, 80% RH.
(1) Control group
(2) Addition of water-soluble dietary fiber (B) at 1.0% during kneading of dough.
(3) Addition of water-soluble dietary fiber (B) at 0.5% during kneading of dough, followed by shaping and boiling, and then immersion for 10 seconds in 1.0% aqueous solution of water-soluble dietary fiber (B), and draining.
(4) Boiled noodle preparation, followed by immersion for 10 seconds in 1.0% aqueous solution of water-soluble dietary fiber (B), and draining.

The results of the storage test are shown in Table 41 below.

**Table 41**

| Test group | | 12 | 24 | 36 | 48 | 60 | 72 | 84 |
|---|---|---|---|---|---|---|---|---|
| 1 | (Control) | - | + | ++ | | | | |
| 2 | (Example group) | - | - | - | + | ++ | | |
| 3 | (Example group) | - | - | - | - | + | ++ | |
| 4 | (Example group) | - | - | - | - | - | + | ++ |

| | | | | | | | | |
|---|---|---|---|---|---|---|---|---|
| - : No change + : Microbial growth, partial softening ++: Microbial growth, partial decomposition | | | | | | | | |

As is clear from these results, the Example groups (2), (3) and (4) exhibited excellent preserving properties.

### Industrial Applicability

Water-soluble dietary fiber according to the present invention, obtained by extraction from cacao husks under pressurization at a temperature above 100°C to a post-extraction pH of between pH 2.0 and 6.5, was found to have a characteristic function different from conventional stabilizers, whereby it stabilizes a dispersion of proteins in the acidic pH range above their isoelectric point, and confers suitable viscosity to prepared food products. This function can be utilized to prepare acidic protein food products not possible according to the prior art. They also provide a function whereby the prepared acidic protein food products can be preserved in a stable condition even when heated to a high temperature by retort sterilization or the like.

When the cacao husk-derived water-soluble dietary fiber of the invention is added as a shelf-life extender to a food product, it exhibits an adequate shelf-life extending effect and satisfactory preserving properties, even when added in a small amount. Addition of the shelf-life extender to raw materials or during processing steps can provide a sufficient effect, and may therefore offer advantages in terms of workability. In addition, the cacao husk-derived water-soluble dietary fiber may also be used in combination with substances such as ethanol, glycine, lysine or glycerin fatty acid esters, for reinforcement of its preserving properties.

## Claims

1. A production process for water-soluble dietary fiber comprising hot water extraction of cacao **characterised in that** the hot water extraction is of the outer covering of cacao seeds, that the hot water extraction is carried out under pressure at above 100°C and no higher than 130°C and that the pH upon completion of the extraction is between pH 2.0 and pH 6.5.

2. A production process according to claim 1, wherein the extracted water-soluble dietary fiber is purified by one or more types of treatment selected from among active carbon treatment, resin treatment, UF concentration treatment and solvent precipitation treatment.

3. A production process according to claim 1 or 2, wherein the extracted water-soluble dietary fiber is desalted by dialysis or ion-exchange resin treatment.

4. Water-soluble dietary fiber derived from the outer covering of cacao seeds, obtainable by a process according to any one of claims 1 to 3.

5. A dispersion stabilizer comprising water-soluble dietary fiber according to claim 4.

6. A preparation method for an acidic protein food product comprising using a dispersion stabilizer according to claim 5.

7. A preparation method for an acidic protein food product according to claim 6, wherein the pH of the acidic protein food product is adjusted to weak acidity above the isoelectric point of the protein used.

8. An acidic protein food product containing water-soluble dietary fiber derived from the outer covering of cacao seeds according to claim 4, obtainable by a method according to claim 6 or 7.

9. A preparation method for a chocolate beverage comprising using a dispersion stabilizer according to claim 5.

10. A preparation method for a chocolate beverage according to claim 9, wherein water-soluble dietary fiber is added to the dispersion stabilizer at 0.05-20.0 wt% with respect to the total chocolate beverage.

11. A preparation method for a chocolate beverage according to claim 9 or 10, wherein the pH of the chocolate beverage is 5.0-9.0.

12. A chocolate beverage containing water-soluble dietary fiber derived from the outer covering of cacao seeds according to claim 4, obtainable according to any one of claims 9 to 11.

13. A coating agent comprising water-soluble dietary fiber according to claim 4.

14. A coating agent according to claim 13 comprising water-soluble dietary fiber, wherein the viscosity of a 10 wt% aqueous solution of the water-soluble dietary fiber is 10-500 cPs at 20°C.

15. A coating agent according to claim 13 or 14, wherein the water-soluble dietary fiber content is 0.1-50 wt% with respect to the total coating agent.

16. A coating method employing a coating agent according to any one of claims 13 to 15.

17. A coating method comprising spraying a product to be treated with a solution of a coating agent according to any one of claims 13 to 16, and then drying it.

18. A coating method comprising immersing a product to be treated in a solution of a coating agent according to any one of claims 13 to 16, and then drying it.

19. An age resistor for a starch-containing food product, comprising the water-soluble dietary fiber according to claim 4.

20. An anti-aging method for a starch-containing food product comprising adding thereto water-soluble dietary fiber contained in the age resistor according to claim 19 in a proportion of 0.1-15 parts by weight per 100 parts by weight of starch.

21. A starch-containing food product containing cacao bean material-derived water-soluble dietary fiber according to claim 4, obtainable by an anti-aging method according to claim 20.

22. A starch-containing food product according to claim 21, wherein the starch-containing food product is cooked, steamed or boiled and then refrigerated or frozen.

23. A starch containing food product according to claim 21 or 22, wherein the starch-containing food product is heated in a microwave oven before consumption, and consumed either while hot or after cooling.

24. A shelf-life extender for a food or beverage, comprising water-soluble dietary fiber according to claim 6.

25. A preservation method for a food or beverage comprising adding thereto water-soluble dietary fiber contained in the shelf-life extender according to claim 24 in an amount of 0.01-50 wt% with respect to the food or beverage.

26. A preservation method according to claim 25, **characterized by** using in combination (A) a shelf-life extender obtained by a method according to claim 24, and (B) one or more selected from among ethanol, glycine, sorbic acid and benzoic acid and their salts, organic acids such as acetic acid, fumaric acid and adipic acid and their salts, lower fatty acid esters, sugar esters, polylysine, protamine, lysozyme, mustard extract, horseradish extract, chitosan and phytic acid.

## Patentansprüche

1. Herstellungsverfahren für eine wasserlösliche Nahrungsfaser, umfassend eine Heißwasserextraktion von Kakao, **dadurch gekennzeichnet, dass** die Heißwasserextraktion von der äußeren Abdeckung von Kakaosamen stattfindet, dass die Heißwasserextraktion unter Druck bei über 100 °C und nicht höher als 130 °C ausgeführt wird und dass der pH-Wert bei der Vollendung der Extraktion zwischen pH 2,0 und pH 6,5 liegt.

2. Herstellungsverfahren nach Anspruch 1, wobei die extrahierte wasserlösliche Nahrungsfaser durch eine oder mehrere Arten einer Behandlung gereinigt wird, die aus einer Aktivkohlebehandlung, einer Harzbehandlung, einer UF-Konzentrationsbehandlung und einer Lösungsmittelausfällungsbehandlung ausgewählt ist.

3. Herstellungsverfahren nach Anspruch 1 oder 2, wobei die extrahierte wasserlösliche Nahrungsfaser durch Dialyse oder Ionenaustauschharz-Behandlung entsalzt wird.

4. Wasserlösliche Nahrungsfaser, die von der äußeren Abdeckung von Kakaosamen stammt und durch ein Verfahren nach einem der Ansprüche 1 bis 3 erhältlich ist.

5. Dispersionsstabilisator mit einer wasserlöslichen Nahrungsfaser nach Anspruch 4.

6. Zubereitungsverfahren für ein Säureproteinnahrungsmittelprodukt, umfassend die Verwendung eines Dispersionsstabilisators nach Anspruch 5.

7. Zubereitungsverfahren für ein Säureproteinnahrungsmittelprodukt nach Anspruch 6, wobei der pH-Wert des Säureproteinnahrungsmittelprodukts auf schwache Azidität über dem isoelektrischen Punkt des verwendeten Proteins eingestellt wird.

8. Säureproteinnahrungsmittelprodukt, das eine wasserlösliche Nahrungsfaser, die von der äußeren Abdeckung von Kakaosamen stammt, nach Anspruch 4 enthält, welches durch ein Verfahren nach Anspruch 6 oder 7 erhältlich ist.

9. Zubereitungsverfahren für ein Schokoladengetränk, umfassend die Verwendung eines Dispersionsstabilisators nach Anspruch 5.

10. Zubereitungsverfahren für ein Schokoladengetränk nach Anspruch 9, wobei die wasserlösliche Nahrungsfaser zum Dispersionsstabilisator mit 0,05-20,0 Gew.-% in Bezug auf das gesamte Schokoladengetränk zugegeben wird.

11. Zubereitungsverfahren für ein Schokoladengetränk nach Anspruch 9 oder 10, wobei der pH-Wert des Schokoladengetränks 5,0-9,0 ist.

12. Schokoladengetränk, das eine wasserlösliche Nahrungsfaser, die von der äußeren Abdeckung von Kakaosamen stammt, nach Anspruch 4 enthält, welches nach einem der Ansprüche 9 bis 11 erhältlich ist.

13. Beschichtungsmittel mit einer wasserlöslichen Nahrungsfaser nach Anspruch 4.

14. Beschichtungsmittel nach Anspruch 13, mit einer wasserlöslichen Nahrungsfaser, wobei die Viskosität einer 10 gewichtsprozentigen wässerigen Lösung der wasserlöslichen Nahrungsfaser 10-500 cPs bei 20 °C ist.

15. Beschichtungsmittel nach Anspruch 13 oder 14, wobei der Gehalt der wasserlöslichen Nahrungsfaser 0,1-50 Gew.-% in Bezug auf das gesamte Beschichtungsmittel ist.

16. Beschichtungsverfahren, das ein Beschichtungsmittel nach einem der Ansprüche 13 bis 15 verwendet.

17. Beschichtungsverfahren, umfassend das Besprühen eines zu behandelnden Produkts mit einer Lösung eines Beschichtungsmittels nach einem der Ansprüche 13 bis 16 und dann Trocknen desselben.

18. Beschichtungsverfahren, umfassend das Eintauchen eines zu behandelnden Produkts in eine Lösung eines Beschichtungsmittels nach einem der Ansprüche 13 bis 16 und dann Trocknen desselben.

19. Alterungsschutzmittel für ein Stärke enthaltendes Nahrungsmittelprodukt mit der wasserlöslichen Nahrungsfaser nach Anspruch 4.

20. Alterungsschutzverfahren für ein Stärke enthaltendes Nahrungsmittelprodukt, umfassend das zugeben einer wasserlöslichen Nahrungsfaser zu diesem, welche im Alterungsschutzmittel nach Anspruch 19 enthalten ist, in einem Anteil von 0,1-15 Gewichtsteilen pro 100 Gewichtsteilen von Stärke.

21. Stärke enthaltendes Nahrungsmittelprodukt, das eine von Kakaobohnenmaterial stammende wasserlösliche Nahrungsfaser nach Anspruch 4 enthält, welches durch ein Alterungsschutzverfahren nach Anspruch 20 erhältlich ist.

22. Stärke enthaltendes Nahrungsmittelprodukt nach Anspruch 21, wobei das Stärke enthaltende Nahrungsmittelprodukt gekocht, gedünstet oder gesiedet und dann gekühlt oder gefroren wird.

23. Stärke enthaltendes Nahrungsmittelprodukt nach Anspruch 21 oder 22, wobei das Stärke enthaltende Nahrungsmittelprodukt vor dem Verzehr in einem Mikrowellenofen erhitzt wird und entweder heiß oder nach Abkühlung verzehrt wird.

24. Lagerfähigkeitsverlängerungsmittel für ein Nahrungsmittel oder Getränk mit der wasserlöslichen Nahrungsfaser nach Anspruch 6.

25. Konservierungsverfahren für ein Nahrungsmittel oder Getränk, umfassend Zugeben einer im Lagerfähigkeitsverlängerungsmittel nach Anspruch 24 enthaltenen wasserlöslichen Nahrungsfaser in einer Menge von 0,01-50 Gew.-% in Bezug auf das Nahrungsmittel oder Getränk zu diesem.

26. Konservierungsverfahren nach Anspruch 25, **gekennzeichnet durch** die Verwendung in Kombination (A) eines Lagerfähigkeitsverlängerungsmittels, das **durch** ein Verfahren nach Anspruch 24 erhalten wird, und (B) eines oder mehrerer, die aus Ethanol, Glycin, Sorbinsäure und Benzoesäure und ihren Salzen, organischen Säuren wie z.B. Essigsäure, Fumarsäure und Adipinsäure und ihren Salzen, niederen Fettsäureestern, Zuckerestern, Polylysin, Protamin, Lysozym, Senfextrakt, Meerrettichextrakt, Chitosan und Phytinsäure ausgewählt sind.

## Revendications

1. Procédé de fabrication de fibres alimentaires hydrosolubles comprenant une extraction à l'eau chaude de cacao, **caractérisé en ce que** l'extraction à l'eau chaude est effectuée sur l'enrobage externe des graines de cacao, **en ce que** l'extraction à l'eau chaude est exécutée sous pression à plus de 100 °C et moins de 130 °C et **en ce que** le pH à la fin de l'extraction est compris entre pH = 2,0 et pH = 6,5.

2. Procédé de fabrication selon la revendication 1, dans lequel la fibre alimentaire hydrosoluble extraite est purifiée par un ou plusieurs types de traitement choisis parmi un traitement au charbon actif, un traitement à la résine, un traitement par concentration UF et un traitement par précipitation de solvant.

3. Procédé de fabrication selon la revendication 1 ou 2, dans lequel la fibre alimentaire hydrosoluble extraite est désalivisée par dialyse ou par un traitement sur résine échangeuse d'ions.

4. Fibre alimentaire hydrosoluble dérivée de l'enrobage externe de graines de cacao, susceptible d'être obtenue par un procédé selon l'une quelconque des revendications 1 à 3.

5. Agent stabiliseur de dispersion comprenant une fibre alimentaire soluble dans l'eau selon la revendication 4.

6. Procédé de préparation d'un produit alimentaire à base de protéine acide comprenant l'utilisation d'un agent stabiliseur de dispersion selon la revendication 5.

7. Procédé de préparation d'un produit alimentaire à base de protéine acide selon la revendication 6, dans lequel le pH du produit alimentaire à base de protéine acide est ajusté à une acidité faible supérieure au point isoélectrique de la protéine utilisée.

8. Produit alimentaire à base de protéine acide contenant une fibre alimentaire hydrosoluble dérivée de l'enrobage externe de graines de cacao selon la revendication 4, susceptible d'être obtenu par un procédé selon la revendication 6 ou 7.

9. Procédé de préparation d'une boisson chocolatée comprenant l'utilisation d'un agent stabiliseur de dispersion selon la revendication 5.

10. Procédé de préparation d'une boisson chocolatée selon la revendication 9, dans lequel la fibre alimentaire hydrosoluble est ajoutée à l'agent stabiliseur de dispersion à hauteur de 0,05 à 20 % en poids par rapport à la totalité de la boisson chocolatée.

11. Procédé de préparation d'une boisson chocolatée selon la revendication 9 ou 10, dans lequel le pH de la boisson chocolatée est compris entre 5,0 et 9,0.

12. Boisson chocolatée contenant une fibre alimentaire hydrosoluble dérivée de l'enrobage externe de graines de cacao selon la revendication 4, susceptible d'être obtenue selon l'une quelconque des revendications 9 à 11.

13. Agent de revêtement comprenant la fibre alimentaire soluble dans l'eau selon la revendication 4.

14. Agent de revêtement selon la revendication 13, comprenant la fibre alimentaire hydrosoluble, dans lequel la viscosité d'une solution aqueuse à 10 % en poids de la fibre alimentaire hydrosoluble est comprise entre 10 et 500 cPs à 20 °C.

15. Agent de revêtement selon la revendication 13 ou 14, dans lequel la teneur en fibres alimentaires hydrosolubles est comprise entre 0,1 et 50 % en poids par rapport à la totalité de l'agent de revêtement.

16. Procédé de revêtement utilisant un agent de revêtement selon l'une quelconque des revendications 13 à 15.

17. Procédé de revêtement comprenant la pulvérisation d'un produit destiné à être traité avec une solution d'un agent de revêtement selon l'une quelconque des revendications 13 à 16 puis son séchage.

18. Procédé de revêtement comprenant l'immersion d'un produit destiné à être traité dans une solution d'un agent de revêtement selon l'une quelconque des revendications 13 à 16 puis son séchage.

19. Agent d'antivieillissement destiné à un produit alimentaire contenant de l'amidon, comprenant une fibre alimentaire hydrosoluble selon la revendication 4.

20. Procédé d'antivieillissement destiné à un produit alimentaire contenant de l'amidon comprenant l'ajout à celui-ci d'une fibre alimentaire hydrosoluble contenue dans un agent d'antiviellissement selon la revendication 19 selon une proportion de 0,1 à 15 parties en poids pour 100 parties en poids d'amidon.

21. Produit alimentaire contenant de l'amidon contenant une fibre alimentaire hydrosoluble dérivée d'une fève de cacao selon la revendication 4, susceptible d'être obtenu par un procédé antivieillissement selon la revendication 20.

22. Produit alimentaire contenant de l'amidon selon la revendication 21, dans lequel le produit alimentaire contenant de l'amidon est cuit au four, cuit à la vapeur ou bouilli, puis réfrigéré ou congelé.

23. Produit alimentaire contenant de l'amidon selon la revendication 21 ou 22, dans lequel le produit alimentaire contenant de l'amidon est chauffé dans un four à micro-ondes avant d'être consommé et est consommé soit chaud soit refroidi.

24. Substance prolongeant la durée de conservation d'un aliment ou d'une boisson comprenant une fibre alimentaire hydrosoluble selon la revendication 6.

25. Procédé de conservation d'un aliment ou d'une boisson comprenant l'ajout d'une fibre alimentaire hydrosoluble contenue dans la substance prolongeant la durée de conservation selon la revendication 24 en une quantité comprise entre 0,01 et 50 % en poids par rapport à l'aliment ou à la boisson.

26. Procédé de conservation selon la revendication 25, **caractérisé par** l'utilisation en combinaison de (A) une substance prolongeant la durée de conservation obtenue par un procédé selon la revendication 24 et (B) un ou plusieurs éléments choisis parmi l'éthanol, la glycine, l'acide sorbique et l'acide benzoïque ainsi que leurs sels, les acides organiques comme l'acide acétique, l'acide fumarique et l'acide adipique et leurs sels, les esters d'acides gras inférieurs, les esters de sucre, la polylysine, la protamine, la lysozyme, un extrait de moutarde, un extrait de raifort, le chitosane et l'acide phytique.
